# EUROPEAN PATENT APPLICATION

(11) **EP 4 770 245 A1**
(43) Date of publication of application: **01.07.2026**
(21) Application number: 23951842.6
(22) Date of filing: 14.09.2023
(51) Int. Cl.: H04W 72/232

(54) **COMMUNICATION METHOD AND APPARATUS**

(71) Applicant: HUAWEI TECHNOLOGIES CO., LTD., Shenzhen 518129 (CN)
(72) Inventor: GAO, Na, Shenzhen, Guangdong 518129 (CN); TANG, Hao, Shenzhen, Guangdong 518129 (CN); WANG, Ting, Shenzhen, Guangdong 518129 (CN)
(74) Representative: MERH-IP Matias Erny Reichl Hoffmann Patentanwälte PartG mbB
(86) International application number: PCT/CN2023/118829
(87) International publication number: WO 2025/054904

(57) **Abstract**

This application relates to the field of communication technologies, and provides a communication method and apparatus, to resolve a problem of high latency in blind detection for control information performed by a terminal device in multi-service or multi-data multiplexing scenarios. The method includes: A network device sends first control information to a terminal, where the first control information indicates scheduling of second control information corresponding to a plurality of pieces of data, and the plurality of pieces of data include at least first data and second data; and the network device sends second control information to the terminal, where the second control information indicates scheduling corresponding to the plurality of pieces of data.

## Description

### TECHNICAL FIELD

This application relates to the field of communication technologies, and in particular, to a communication method and apparatus.

### BACKGROUND

With the rapid development of wireless communication technologies, wireless applications of users are increasingly diversified, including three major application scenarios of enhanced mobile broadband (Enhanced Mobile Broadband, eMBB), massive internet of things (Massive Machine-Type Communication, mMTC), and ultra-reliable low-latency communication (Ultra-reliability low-latency communication, URLLC). A network device may deliver control signaling to a terminal by using downlink control information (Downlink Control Information, DCI), to indicate data scheduling for different services. For example, in two-stage DCI indication, 1^{st}-stage DCI may be transmitted on a physical downlink control channel (Physical Downlink Control Channel, PDCCH), and the terminal may obtain, through PDCCH blind detection, scheduling information that is of 2^{nd}-stage DCI and that is indicated in the 1^{st}-stage DCI. The 2^{nd}-stage DCI may be transmitted on a physical downlink shared channel (Physical Downlink Shared Channel, PDSCH), and indicate downlink scheduling information and/or uplink scheduling information.

However, in multi-service or multi-data multiplexing scenarios, the terminal needs to perform blind detection a plurality of times to obtain control information of a plurality of pieces of data, resulting in high latency and high power consumption.

### SUMMARY

Embodiments of this application provide a communication method and apparatus, to resolve a problem of high latency and high power consumption in blind detection of control information in multi-service or multi-data multiplexing scenarios.

To achieve the foregoing objective, this application uses the following technical solutions.

According to a first aspect, a communication method is provided. The method includes: receiving first control information, where the first control information indicates scheduling of second control information corresponding to a plurality of pieces of data, and the plurality of pieces of data include at least first data and second data; and receiving the second control information, where the second control information indicates scheduling of the plurality of pieces of data.

In the foregoing implementation, the data may be user data, service data, or the like. In multi-service or multi-data multiplexing scenarios, a transmit end may perform joint indication on control information corresponding to a plurality of pieces of data, for example, a DCI design for multi-data multiplexing is used, so that in the multi-data multiplexing scenario, blind detection for first control information carried on only one PDCCH is needed, that is, the PDCCH needs to be decoded only once. This makes blind detection less complex, and effectively reduces power consumption and latency in blind detection.

In an implementation, the second control information includes third information and fourth information. All or a part of the third information indicates scheduling corresponding to the first data, and all or a part of the fourth information indicates scheduling corresponding to the second data. Alternatively, all or a part of the third information and all or a part of the fourth information jointly indicate scheduling corresponding to the first data, and all or a part of the third information and all or a part of the fourth information jointly indicate scheduling corresponding to the second data.

In the foregoing implementation, the second control information may include scheduling information corresponding to the plurality of pieces of data, for example, the third information and the fourth information. The third information or the fourth information may respectively indicate scheduling of the first data and scheduling of the second data, or may jointly indicate scheduling of the first data and scheduling of the second data. This makes a data scheduling manner more flexible.

In an implementation, the first control information includes first information and second information, and the second control information includes the third information and the fourth information. All or a part of the first information indicates scheduling of the third information, and all or a part of the second information indicates scheduling of the fourth information. Alternatively, all or a part of the first information and all or a part of the second information jointly indicate scheduling of the third information, and all or a part of the first information and all or a part of the second information jointly indicate scheduling of the fourth information. All or a part of the third information indicates scheduling corresponding to the first data, and all or a part of the fourth information indicates scheduling corresponding to the second data. Alternatively, all or a part of the third information and all or a part of the fourth information jointly indicate scheduling corresponding to the first data, and all or a part of the third information and all or a part of the fourth information jointly indicate scheduling corresponding to the second data.

In the foregoing implementation, the first control information may include scheduling information, for example, the first information and the second information, of 2^{nd}-stage DCI (that is, the third information or the fourth information) corresponding to the plurality of pieces of data. The first information or the second information may respectively indicate scheduling of the third information and scheduling of the fourth information, or may jointly indicate scheduling of the third information and scheduling of the fourth information. This makes an indication manner of the control information relatively flexible. In addition, in the multi-data multiplexing scenario, blind detection for first control information carried on only one PDCCH is needed. This makes blind detection less complex, and effectively reduces power consumption and latency in blind detection.

In an implementation, coding reliability corresponding to a bit that carries the first information is higher than coding reliability corresponding to a bit that carries the second information, and a reliability requirement corresponding to the first data is higher than a reliability requirement corresponding to the second data.

In the foregoing implementation, the transmit end may map, based on reliability requirements of different pieces of data, coded symbols of information, in the first control information, corresponding to the data to bits with different reliability, so that a high reliability requirement of a service or data can be met, and resource utilization and communication efficiency can be improved.

In an implementation, coding reliability corresponding to a bit that carries the third information is higher than coding reliability corresponding to a bit that carries the fourth information, and a reliability requirement corresponding to the first data is higher than a reliability requirement corresponding to the second data.

In the foregoing implementation, the transmit end may map, based on reliability requirements of different pieces of data, coded symbols of information, in the second control information, corresponding to the data to bits with different reliability, so that a high reliability requirement of a service or data can be met, and resource utilization and communication efficiency can be improved.

In an implementation, if a first multi-data joint coding scheme is used for the first information and the second information, the method further includes: performing joint decoding based on the first information and the second information; or if the first multi-data joint coding scheme is used for the third information and the fourth information, the method further includes: performing joint decoding based on the third information and the fourth information.

In the foregoing implementation, when the transmit end uses first multi-data joint coding, a receive end uses a corresponding decoding scheme, that is, performs joint decoding based on bit information corresponding to the plurality of pieces of data. Therefore, a latency of one decoding process is shorter.

In an implementation, if a second multi-data joint coding scheme is used for the third information and the fourth information, the method further includes: performing separate decoding based on the third information, and performing joint decoding based on the third information and the fourth information; or if the second multi-data joint coding scheme is used for the first information and the second information, the method further includes: performing separate decoding based on the first information, and performing joint decoding based on the first information and the second information.

In the foregoing implementation, when the transmit end uses second multi-data joint coding, the receive end uses a corresponding decoding scheme, to be specific, independent decoding and joint decoding based on bit information corresponding to the plurality of pieces of data are combined. Such joint decoding of a short code and a long code can obtain a long code gain, thereby improving decoding reliability.

In an implementation, the method further includes: obtaining first indication information, where the first indication information indicates whether the first control information and the second control information are used to jointly indicate scheduling of the plurality of pieces of data.

In the foregoing implementation, the receive end may determine, based on the indication of the first indication information, whether the transmit end uses a scheduling manner based on joint indication for multi-service or multi-data. This can improve flexibility of indication with the control information, and improve communication efficiency.

In an implementation, if the first indication information indicates that the first control information and the second control information are used to jointly indicate scheduling of the plurality of pieces of data, the method further includes: obtain second indication information, where the second indication information indicates that a coding scheme of the second control information is the first multi-data joint coding scheme, the second multi-data joint coding scheme, or a multi-data separate coding scheme.

In the foregoing implementation, the receive end may determine, based on the indication of the second indication information, a coding scheme used by the transmit end, so that decoding can be performed using a corresponding decoding scheme, thereby improving flexibility of encoding and decoding schemes.

In an implementation, if the multi-data separate coding scheme is used for the third information and the fourth information, the method further includes: performing separate decoding based on the third information, and performing separate decoding based on the fourth information.

In the foregoing implementation, separate encoding may be performed on scheduling information, in the second control information, corresponding to the plurality of pieces of data. Correspondingly, the receive end may perform separate decoding on received information bits, to obtain the third information and the fourth information.

In an implementation, the first information and the second information jointly indicate information about a first resource jointly occupied by the third information and the fourth information and a ratio between a code length corresponding to the third information and a code length corresponding to the fourth information.

In the foregoing implementation, the transmit end may further use joint indication to indicate the ratio, in the second control information, between the code length corresponding to the third information and the code length corresponding to the fourth information. The receive end may receive the second control information, distinguish between a bit length corresponding to the third information and a bit length corresponding to the fourth information that are included in the second control information, and then perform decoding separately.

In an implementation, the first information and the second information jointly indicate at least one of the following: information about a first resource jointly occupied by the third information and the fourth information; and a first index value, where the first index value indicates an MCS index value corresponding to the third information and/or an MCS index value corresponding to the fourth information.

In the foregoing implementation, the receive end may receive the first control information, distinguish, based on an indication in the first control information, between a resource corresponding to the third information and a resource corresponding to the fourth information that are included in the second control information, and then perform decoding separately. In addition, the receive end may determine, based on a predefined resource configuration or the first index value jointly indicated by the first information and the second information, related information such as a resource and an MCS related to decoding of the third information and the fourth information. An indication manner is flexible, and may be explicit indication, or may be implemented through resource pre-configuration or protocol definition.

In an implementation, the first information and the second information further jointly indicate at least one of the following: a relationship between a second resource occupied by the third information and the first resource; a relationship between the MCS index value corresponding to the third information and the MCS index value corresponding to the fourth information; and a first index table, where the first index table includes correspondences between a plurality of index values, and an MCS index value corresponding to third information and an MCS index value corresponding to fourth information.

In the foregoing implementation, the receive end may receive the first control information, distinguish, based on the indication in the first control information, between the resource corresponding to the third information and the resource corresponding to the fourth information that are included in the second control information, and obtain information such as an MCS related to decoding of the third information and the fourth information, and then perform decoding separately. An indication manner is flexible, and may be explicit indication, or may be implemented through resource pre-configuration or protocol definition.

In an implementation, the first control information is carried in 1st-stage downlink control information DCI, and the second control information is carried in 2^{nd}-stage DCI.

According to a second aspect, a communication method is provided. The method includes: sending first control information, where the first control information indicates scheduling of second control information corresponding to a plurality of pieces of data, and the plurality of pieces of data include at least first data and second data; and sending the second control information, where the second control information indicates scheduling of the plurality of pieces of data.

In an implementation, the second control information includes third information and fourth information. All or a part of the third information indicates scheduling corresponding to the first data, and all or a part of the fourth information indicates scheduling corresponding to the second data. Alternatively, all or a part of the third information and all or a part of the fourth information jointly indicate scheduling corresponding to the first data, and all or a part of the third information and all or a part of the fourth information jointly indicate scheduling corresponding to the second data.

In an implementation, the first control information includes first information and second information, and the second control information includes the third information and the fourth information. All or a part of the first information indicates scheduling of the third information, and all or a part of the second information indicates scheduling of the fourth information. Alternatively, all or a part of the first information and all or a part of the second information jointly indicate scheduling of the third information, and all or a part of the first information and all or a part of the second information jointly indicate scheduling of the fourth information. All or a part of the third information indicates scheduling corresponding to the first data, and all or a part of the fourth information indicates scheduling corresponding to the second data. Alternatively, all or a part of the third information and all or a part of the fourth information jointly indicate scheduling corresponding to the first data, and all or a part of the third information and all or a part of the fourth information jointly indicate scheduling corresponding to the second data.

In an implementation, coding reliability corresponding to a bit that carries the first information is higher than coding reliability corresponding to a bit that carries the second information, and a reliability requirement corresponding to the first data is higher than a reliability requirement corresponding to the second data.

In an implementation, coding reliability corresponding to a bit that carries the third information is higher than coding reliability corresponding to a bit that carries the fourth information, and a reliability requirement corresponding to the first data is higher than a reliability requirement corresponding to the second data.

In an implementation, if a first multi-data joint coding scheme is used for the first information and the second information, the method further includes: performing joint encoding based on the first information and the second information; or if the first multi-data joint coding scheme is used for the third information and the fourth information, the method further includes: performing joint encoding based on the third information and the fourth information.

In an implementation, if a second multi-data joint coding scheme is used for the third information and the fourth information, the method further includes: performing separate encoding based on the third information, and performing joint encoding based on the third information and the fourth information; or if the second multi-data joint coding scheme is used for the first information and the second information, the method further includes: performing separate encoding based on the first information, and performing joint encoding based on the first information and the second information.

In an implementation, the method further includes: obtaining first indication information, where the first indication information indicates whether the first control information and the second control information are used to jointly indicate scheduling of the plurality of pieces of data.

In an implementation, if the first indication information indicates that the first control information and the second control information are used to jointly indicate scheduling of the plurality of pieces of data, the method further includes: obtaining second indication information, where the second indication information indicates that a coding scheme of the second control information is the first multi-data joint coding scheme, the second multi-data joint coding scheme, or a multi-data separate coding scheme.

In an implementation, if the multi-data separate coding scheme is used for the third information and the fourth information, the method further includes: performing separate encoding based on the third information, and performing separate encoding based on the fourth information.

In an implementation, the first information and the second information jointly indicate information about a first resource jointly occupied by the third information and the fourth information and a ratio between a code length corresponding to the third information and a code length corresponding to the fourth information.

In an implementation, the first information and the second information jointly indicate at least one of the following: information about a first resource jointly occupied by the third information and the fourth information; and a first index value, where the first index value indicates an MCS index value corresponding to the third information and/or an MCS index value corresponding to the fourth information.

In an implementation, the first information and the second information further jointly indicate at least one of the following: a relationship between a second resource occupied by the third information and the first resource; a relationship between the MCS index value corresponding to the third information and the MCS index value corresponding to the fourth information; and a first index table, where the first index table includes correspondences between a plurality of index values, and an MCS index value corresponding to third information and an MCS index value corresponding to fourth information.

In an implementation, the first control information is carried in 1st-stage downlink control information DCI, and the second control information is carried in 2^{nd}-stage DCI.

According to a third aspect, a communication apparatus is provided, and is configured to implement the foregoing method. The communication apparatus may be the transmit end in the second aspect, or an apparatus including the transmitting function described above, or a module in the transmit end in the second aspect, for example, a chip, a chip system, or a circuit, or a logical node, a logical module, or software that can implement some or all of functions of the transmit end.

Alternatively, the communication apparatus may be the receive end in the first aspect, or an apparatus including the receiving function described above, or a module in the receive end in the first aspect, for example, a chip, a chip system, or a circuit, or a logical node, a logical module, or software that can implement some or all of functions of the receive end.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the communication apparatus may include a processing module and a transceiver module. The processing module may be configured to implement a processing function in any one of the foregoing aspects and any one of the possible implementations of the foregoing aspects. The processing module may be, for example, a processor. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface.

With reference to the third aspect, in a possible implementation, the transceiver module includes a sending module and a receiving module, which are respectively configured to implement the sending function and the receiving function in any one of the foregoing aspects and the possible implementations of the foregoing aspects.

According to a fourth aspect, a communication apparatus is provided, and includes a processor. The processor is configured to: be coupled to a memory, and after reading instructions in the memory, perform the method according to any one of the foregoing aspects based on the instructions. The communication apparatus may be the transmit end in any one of the second aspect and the possible implementations of the second aspect, or an apparatus including the transmitting function described above, or a module in the transmit end, for example, a chip, a chip system, or a circuit, or a logical node, a logical module, or software that can implement some or all of functions of the transmit end.

Alternatively, the communication apparatus may be the receive end in any one of the first aspect and the possible implementations of the first aspect, or an apparatus including the receiving function described above, or a module in the receive end, for example, a chip, a chip system, or a circuit, or a logical node, a logical module, or software that can implement some or all of functions of the transmit end.

With reference to the fourth aspect, in a possible implementation, the communication apparatus further includes a memory. The memory is configured to store necessary program instructions and data.

With reference to the fourth aspect, in a possible implementation, the communication apparatus is a chip or a chip system. Optionally, when the communication apparatus is a chip system, the communication apparatus may include a chip, or may include a chip and another discrete device, for example, include an interface module and a logic circuit, to implement any one of the first aspect and the possible implementations of the first aspect or any one of the second aspect and the possible implementations of the second aspect.

According to a fifth aspect, a communication apparatus is provided, and includes a processor and an interface circuit. The interface circuit is configured to receive a computer program or instructions, and transmit the computer program or the instructions to the processor. The processor is configured to execute the computer program or the instructions, to cause the communication apparatus to perform the method according to any one of the foregoing aspects. The communication apparatus may be the transmit end in any one of the second aspect and the possible implementations of the second aspect, or an apparatus including the transmitting function described above, or a module in the transmit end, for example, a chip, a chip system, or a circuit, or a logical node, a logical module, or software that can implement some or all of functions of the transmit end.

Alternatively, the communication apparatus may be the receive end in any one of the first aspect and the possible implementations of the first aspect, or an apparatus including the receiving function described above, or a module in the receive end, for example, a chip, a chip system, or a circuit, or a logical node, a logical module, or software that can implement some or all of functions of the receive end.

With reference to the fifth aspect, in a possible implementation, the communication apparatus is a chip or a chip system. Optionally, when the communication apparatus is a chip system, the communication apparatus may include a chip, or may include a chip and another discrete device, for example, include an interface module and a logic circuit, to implement any one of the first aspect and the possible implementations of the first aspect or any one of the second aspect and the possible implementations of the second aspect.

According to a sixth aspect, a computer-readable storage medium is provided. The computer-readable storage medium stores instructions, and when the instructions are run on a computer, the computer is caused to perform the method according to any one of the foregoing aspects.

According to a seventh aspect, a computer program product including instructions is provided. When the computer program product is run on a computer, the computer is caused to perform the method according to any one of the foregoing aspects.

According to an eighth aspect, a communication system is provided. The communication system includes a communication apparatus configured to perform the method in any one of the first aspect and the possible implementations of the first aspect, and a communication apparatus configured to perform the method in any one of the second aspect and the possible implementations of the second aspect.

For technical effects brought by any one of the possible implementations of the second aspect to the eighth aspect, refer to technical effects brought by the different possible implementations of the first aspect. Details are not described herein again.

It can be understood that the solutions in the foregoing aspects may be combined if the solutions are not contradictory.

### BRIEF DESCRIPTION OF DRAWINGS

FIG. 1 to FIG. 5 are diagrams of structures of several communication systems according to this application;
FIG. 6 is a diagram of a structure of a communication apparatus according to this application;
FIG. 7A is a diagram of a joint decoding scheme according to this application;
FIG. 7B is a diagram of a two-stage DCI indication manner according to this application;
FIG. 8 is a schematic flowchart of a communication method according to this application;
FIG. 9 is a diagram of a two-stage DCI indication manner according to this application;
FIG. 10 is a diagram of an indication manner of first control information according to this application;
FIG. 11 is a diagram of self-decoding combined with joint decoding according to this application; and
FIG. 12 is a diagram of a structure of another communication apparatus according to this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms "first", "second", and the like mentioned below are merely intended for a purpose of description, and shall not be understood as an indication or implication of relative importance or an implicit indication of a quantity of indicated technical features. Therefore, a feature limited by "first", "second", or the like may explicitly or implicitly include one or more such features.

In addition, in this application, orientation terms such as "upper", "lower", "left", "right", "horizontal", and "vertical" are defined relative to an orientation in which components are schematically placed in the accompanying drawings. It should be understood that, these directional terms are relative concepts that are used for relative description and clarification, and may vary accordingly based on a change of the orientation in which the components are placed in the accompanying drawings.

In this application, unless otherwise clearly specified and limited, the term "connection" should be understood in a broad sense. For example, the "connection" may be a fixed connection, a detachable connection, an integration, a direct connection, or an indirect connection via an intermediate medium.

First, an implementation scenario of embodiments of this application is described with reference to the accompanying drawings.

A method provided in embodiments of this application may be applied to various communication systems, including but not limited to: a non-terrestrial networks (Non-Terrestrial Networks, NTN) communication system, a narrow band-internet of things (Narrow Band-Internet of Things, NB-IoT) system, a global system for mobile communications (Global System for Mobile Communications, GSM), an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a long term evolution (Long Term Evolution, LTE) system, a 5G mobile communication system, and three major application scenarios of a next-generation 6G mobile communication system, including enhanced mobile broadband (Enhanced Mobile Broadband, eMBB), ultra-reliable low-latency communication (Ultra-Reliable Low-Latency Communication, URLLC), and enhanced machine-type communication (Enhanced Machine-Type Communication, eMTC), and the like.

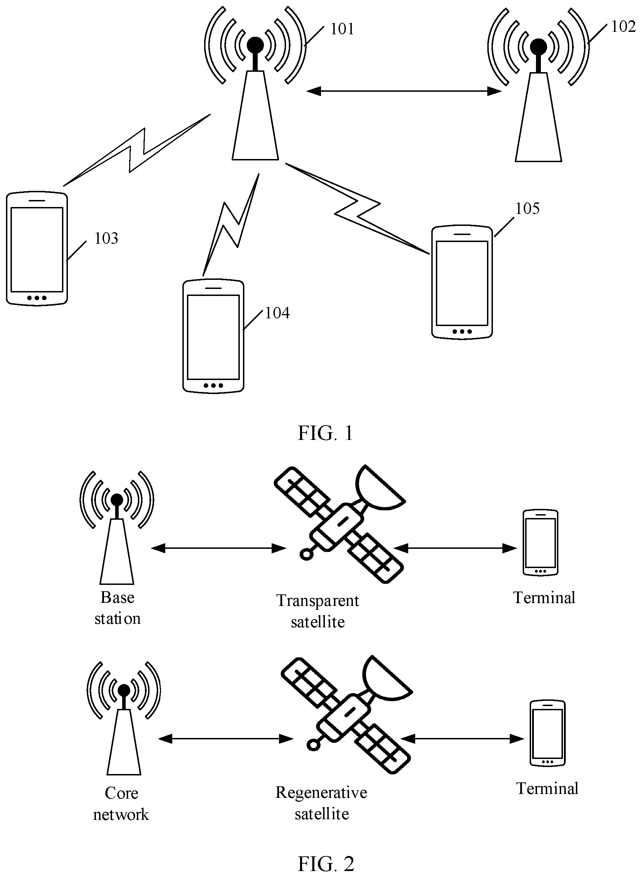

The following describes a communication scenario of embodiments of this application by merely using communication systems shown in FIG. 1 to FIG. 5 as examples.

FIG. 1 is a diagram of an architecture of a communication system according to an embodiment of this application. In FIG. 1, the communication system may include at least one network device and/or at least one terminal device. For example, the communication system may include a network device 101 and a network device 102, or the communication system includes a network device 101 and a terminal device 103, or the communication system may include a terminal device 104 and a terminal device 105.

In FIG. 1, the network device may provide a wireless access service for a terminal device. Specifically, each network device corresponds to one service coverage area. A terminal device that enters the area may communicate with the network device through a Uu interface, to receive a wireless access service provided by the network device. The terminal device and the network device may communicate with each other through a Uu interface link. Uu interface links may be classified into an uplink (uplink, UL) and a downlink (downlink, DL) based on a direction of uplink data transmission on the Uu interface link. Data sent from the terminal device to the network device may be transmitted on the UL, and data transmitted from the network device to the terminal device may be transmitted on the DL. For example, in FIG. 1, the terminal device 103 is located in a coverage area of the network device 101, the network device 101 may send data to the terminal device 103 through the DL, and the terminal device 103 may send data to the network device 101 through the UL.

The terminal device and another terminal device may communicate with each other through a direct communication link. The direct communication link may be referred to as a side link or a sidelink (sidelink, SL). For example, the direct communication link is a sidelink. In FIG. 1, the terminal device 103 and the terminal device 104 may communicate with each other through the sidelink. In FIG. 1, the terminal device 104 and the terminal device 105 may communicate with each other through the sidelink.

The network device in FIG. 1, for example, the network device 101 or the network device 102, may be a transmission reception point (transmission reception point, TRP), a base station, a relay station, an access point, or the like. The network device 101 or 102 may be a network device in a 5G communication system or a network device in a future evolved network, or may be a base transceiver station (base transceiver station, BTS) in a global system for mobile communications (global system for mobile communications, GSM) or code division multiple access (code division multiple access, CDMA) network, or may be an NB (NodeB) in wideband code division multiple access (wideband code division multiple access, WCDMA), or may be an eNB or an eNodeB (evolved NodeB) in long term evolution (long term evolution, LTE). The network device 101 or the network device 102 may alternatively be a radio controller in a cloud radio access network (cloud radio access network, CRAN) scenario.

The terminal device in FIG. 1, for example, the terminal devices 103, the terminal device 104, or the terminal device 105, may be a device that has a wireless transceiver function and can provide a communication service for a user. Specifically, the terminal device 103, the terminal device 104, or the terminal device 105 may be a device in a V2X system, a device in a D2D system, a device in a machine type communication (machine type communication, MTC) system, or the like. For example, the terminal device 103, the terminal device 104, the terminal device 105, or a terminal device 106 may refer to an industrial robot, an industrial automation device, user equipment (user equipment, UE), an access terminal, a subscriber unit, a subscriber station, a mobile station, a mobile console, a remote station, a remote terminal, a mobile device, a user terminal, a terminal, a wireless terminal device, a user agent, or a user apparatus. For example, the terminal device 103, the terminal device 104, the terminal device 105, or the terminal device 106 may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, a vehicle-mounted device, a wearable device, a terminal device in a 5G network or a network after 5G, or a terminal device in a future evolved network. This is not limited in this application. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement a method in this application by using the vehicle-mounted module, the vehicle-mounted assembly, the vehicle-mounted component, the vehicle-mounted chip, or the vehicle-mounted unit that is built in the vehicle.

In an implementation, the network device may be an air network device in an NTN communication system, or may be a non-terrestrial base station or a non-terrestrial device, for example, an unmanned aerial vehicle, a hot-air balloon, a low-orbit satellite, a medium-orbit satellite, or an elevated-orbit satellite. The method provided in embodiments of this application may be applied to a communication system shown in FIG. 2. The communication system may include an air network device, for example, a satellite. The communication system may further include at least one terminal device, for example, a terminal device shown in FIG. 2.

The satellite may work either in a transparent mode or a regenerative mode. When the satellite works in the transparent mode, the satellite may serve as a relay forwarding device to forward a signal of a network device or a terminal, and in this way, can enhance coverage of a terrestrial network. The satellite may have functions of radio frequency filtering, frequency conversion, and amplification. As shown in FIG. 2, transparent forwarding may be performed between a terminal and a base station through the transparent satellite.

When the satellite works in the regenerative mode, the satellite has a signal processing capability. It may be understood that the satellite has a processing function of a base station, and can send a signal to another network device or a terminal device, to provide a communication service for the terminal device. As shown in FIG. 2, a terminal establishes wireless communication with the regenerative satellite through a Uu interface, to implement communication with a core network.

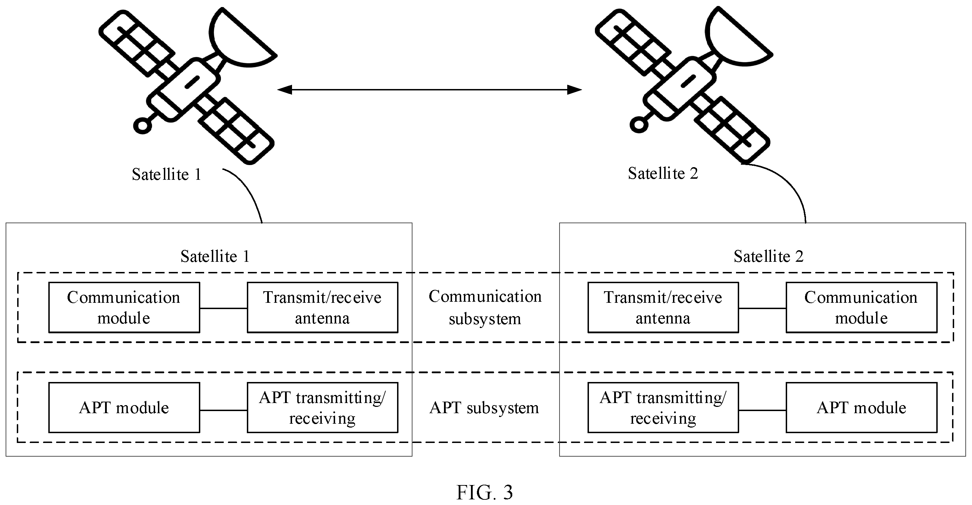

In addition, the method provided in embodiments of this application may be applied to an inter-satellite link (Inter-Satellite Link, ISL) communication system between satellites shown in FIG. 3. The communication system may include a satellite 1 and a satellite 2, and the satellite 1 and the satellite 2 communicate with each other through the inter-satellite link. The satellite includes two parts: an acquisition, pointing and tracking (Acquisition, Pointing and Tracking, APT) subsystem and a communication subsystem, as shown in FIG. 3.

The communication subsystem is responsible for inter-satellite information transmission, and is a main body of the inter-satellite communication system. The APT subsystem is responsible for acquisition, pointing, and tracking between the satellites. Acquisition refers to determining a direction of arrival of an incident signal, pointing refers to adjusting a transmission wave toward a receiving direction, and tracking refers to continuously adjusting pointing and acquisition throughout a communication process. To maximally reduce impact of attenuation and interference on a channel and ensure high confidentiality and transmission rate, the APT can be adjusted in real time to continuously adapt to changes. An existing APT subsystem and an existing communication subsystem are independent systems. The APT subsystem may be an optical system, in which optical alignment is difficult, and pointing needs to be mechanically adjusted. The communication subsystem may be an optical communication system or a system operating in a microwave frequency band, and typically use a single high-gain antenna.

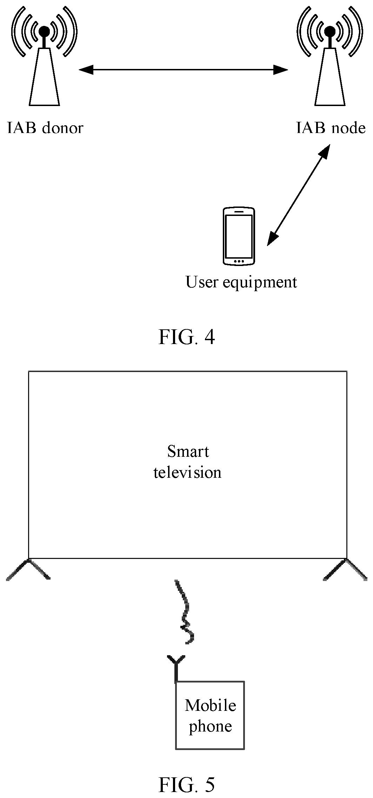

The method provided in embodiments of this application may be applied to an integrated access and backhaul (Integrated Access and Backhaul, IAB) network shown in FIG. 4. The IAB network refers to a transmission network that integrates information access and backhaul between a terminal, a core network, and a user service end (for example, a server). For a backhaul link (backhaul link) and an access link (access link), the IAB network can implement integration of access and backhaul. As shown in FIG. 4, the IAB network may include an IAB-donor (IAB-donor), an IAB-node (IAB-node), and user equipment. A link between the IAB-donor and the IAB-node is the backhaul link, and a link between the user equipment and the IAB-node is the access link.

For example, the method provided in embodiments of this application may be applied to a sidelink communication scenario between terminals. Typical application scenarios include scenarios such as wireless screen projection, a virtual reality (Virtual Reality, VR) game, or data encoding and decoding of an application in a mobile phone. FIG. 5 is a diagram of wireless screen projection of a mobile phone, which involves a smart television and a smartphone that implement screen projection playback by using a wireless signal.

It should be noted that the communication systems shown in FIG. 1 to FIG. 5 are merely used as examples, and are not intended to limit the technical solutions of this application. A person skilled in the art should understand that in a specific implementation process, the communication system may further include another device, and further, a quantity of network devices and a quantity of terminal devices may be determined based on a specific requirement. In addition, network elements in the drawings may further be connected through other interfaces. This is not limited.

Optionally, the network elements in the drawings of embodiments of this application, such as the network device or the terminal device, may be a functional module in an apparatus. It may be understood that the functional module may be an element in a hardware device, for example, a communication chip or a communication component in a terminal device or a network device, or may be a software functional module running on hardware, or a virtualized function instantiated on a platform (for example, a cloud platform).

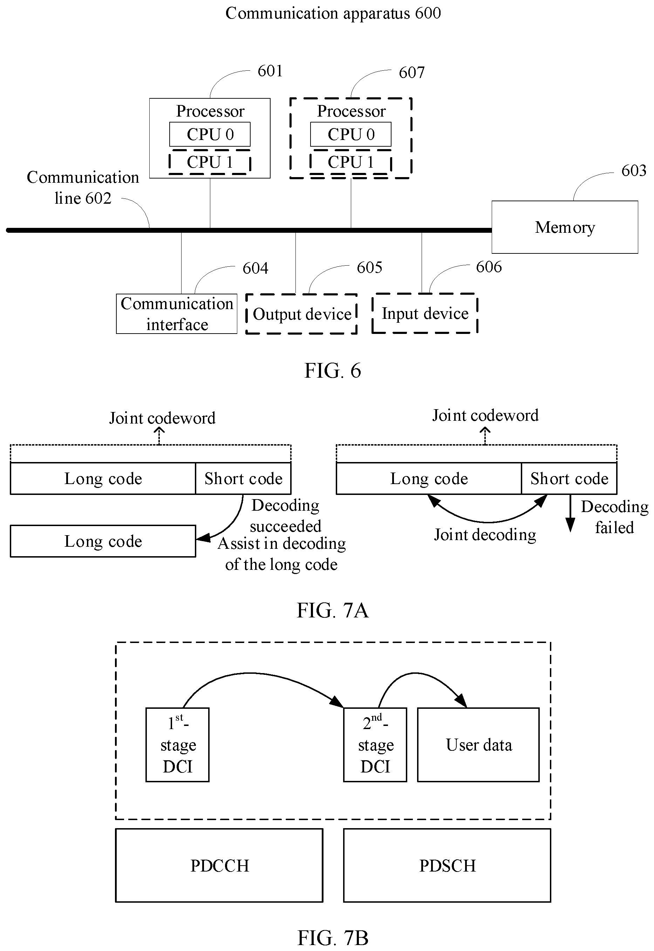

For example, the network elements in FIG. 1 to FIG. 5 may be implemented through a communication apparatus 600 in FIG. 6. FIG. 6 is a diagram of a hardware structure of a communication apparatus applicable to an embodiment of this application. The communication apparatus 600 may include at least one processor 601, a communication line 602, a memory 603, and at least one communication interface 604.

The processor 601 may be a general-purpose central processing unit (central processing unit, CPU), a microprocessor, an application-specific integrated circuit (application-specific integrated circuit, ASIC), or one or more integrated circuits that are configured to control execution of a program in the solutions in this application.

The communication line 602 may include a path, for example, a bus, for transferring information between the foregoing components.

The communication interface 604 is configured to communicate with another device or a communication network through any apparatus such as a transceiver, and is, for example, an Ethernet interface, a radio access network (radio access network, RAN) interface, or a wireless local area network (wireless local area network, WLAN) interface.

The memory 603 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer, but is not limited thereto. The memory may exist independently, and is connected to the processor through the communication line 602. The memory may alternatively be integrated with the processor. The memory provided in this embodiment of this application may be usually non-volatile. The memory 603 is configured to store computer-executable instructions for performing the solutions in this application, and execution of the computer-executable instructions is controlled by the processor 601. The processor 601 is configured to execute the computer-executable instructions stored in the memory 603, to implement the method provided in embodiments of this application.

Optionally, the computer-executable instructions in this embodiment of this application may also be referred to as application program code. This is not specifically limited in this embodiment of this application.

During specific implementation, in an embodiment, the processor 601 may include one or more CPUs, for example, a CPU 0 and a CPU 1 in FIG. 6.

During specific implementation, in an embodiment, the communication apparatus 600 may include a plurality of processors, for example, the processor 601 and a processor 607 in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 600 may further include an output device 605 and an input device 606. The output device 605 communicates with the processor 601, and may display information in a plurality of manners. For example, the output device 605 may be a liquid crystal display (liquid crystal display, LCD), a light emitting diode (light emitting diode, LED) display device, a cathode ray tube (cathode ray tube, CRT) display device, a projector (projector), or the like. The input device 606 communicates with the processor 601, and may receive an input of a user in a plurality of manners. For example, the input device 606 may be a mouse, a keyboard, a touchscreen device, or a sensor device.

During specific implementation, the communication apparatus 600 may be a desktop computer, a portable computer, a network server, a personal digital assistant (personal digital assistant, PDA), a mobile phone, a tablet computer, a wireless terminal device, an embedded device, or a device having a structure similar to that in FIG. 6. A type of the communication apparatus 600 is not limited in this embodiment of this application.

It can be learned from the foregoing description that embodiments of this application may be applied to a multi-service scenario or a multi-data scenario, for example, an eMBB or URLLC service scenario. An URLLC service has a relatively high requirement on communication reliability and a relatively high requirement on latency. For example, a reliability requirement of a specific URLLC service is not less than 99.99999%, and a latency requirement is not greater than 0.1 millisecond. An eMBB service has a relatively low requirement on communication reliability. However, a code length (that is, information is a length) after channel coding is performed on eMBB data is relatively long, and a code length after channel coding is performed on URLLC data is relatively short. According to a coding theory, a longer code length after channel coding indicates better channel coding performance and higher reliability. In this application, coded information may be classified into a short code or a long code based on a code length after channel coding. Embodiments of this application are not limited to the foregoing service scenarios.

Currently, there is an implementation of joint encoding/joint decoding, where joint encoding is performed by using a short code and a long code, to obtain a long code gain. For example, as shown in FIG. 7A, a transmit end may separately encode an URLLC short code, and then jointly encode the URLLC short code and an eMBB long code, to obtain a joint codeword. A receive end may first perform self-decoding based on the URLLC short code in the joint codeword, and if the decoding fails, perform joint decoding to obtain a long code gain. Specific steps are shown in FIG. 7A. The receive end may first separately decode the URLLC short code. If the URLLC short code is successfully decoded, the URLLC short code may assist in decoding of the eMBB long code, so that eMBB can obtain a gain of a reduced code rate. If the URLLC short code fails to be decoded, joint decoding may be performed on the URLLC short code and the eMBB long code, to obtain a long code gain.

In addition, FIG. 7B shows a two-stage DCI indication method. 1^{st}-stage DCI may be carried in a PDCCH, and indicates scheduling information of 2^{nd}-stage DCI, for example, may include information such as a time-frequency-space resource, a modulation order, a code rate, or a format of the 2^{nd}-stage DCI.

The 2^{nd}-stage DCI may be carried in a PDSCH, and indicates scheduling information of data, and may specifically include downlink scheduling information or uplink scheduling information, or include downlink scheduling information and uplink scheduling information.

In this solution, a flexible DCI format can be supported, requiring only blind detection of the 1^{st}-stage DCI with a fixed length, resulting in low latency in blind detection.

According to the foregoing two-stage DCI indication method, in multi-service or multi-data multiplexing scenarios, for example, multiplexing of eMBB and URLLC services, blind detection needs to be performed on both 1^{st}-stage DCI in control information corresponding to eMBB data and 1^{st}-stage DCI in control information corresponding to URLLC data. In other words, blind detection needs to be separately performed on the two types of services/data. Therefore, blind detection latency is relatively high.

Based on the foregoing problem, this application provides a communication method for use in multi-service or multi-data multiplexing scenarios. Joint indication is performed on control information corresponding to a plurality of pieces of data, for example, a DCI design for multi-service multiplexing is used, so that in the multi-service multiplexing scenario, blind detection on only one PDCCH is needed, that is, the PDCCH needs to be decoded only once. This can make blind detection less complex, and effectively reduce power consumption and latency in blind detection.

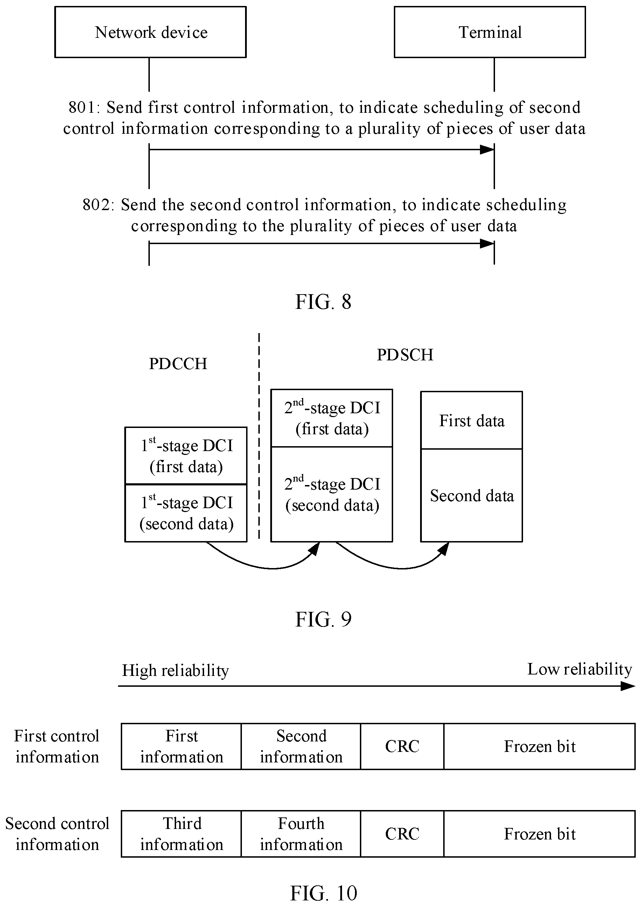

This application provides a communication method. As shown in FIG. 8, the method may include the following steps.

801: A network device sends first control information, to indicate scheduling of second control information corresponding to a plurality of pieces of data.

The first control information indicates scheduling of the second control information corresponding to the plurality of pieces of data. The plurality of pieces of data include at least first data and second data.

It should be noted that the first data or the second data in this embodiment of this application may be specifically user data, service data that provides a specific service for a user, or the like, for example, may be instruction information or audio/video multimedia data. This is not limited in this application.

For example, the first control information is carried in 1^{st}-stage DCI (1^{st} DCI), and the second control information is carried in 2^{nd}-stage DCI (2^{nd} DCI). In other words, the 1^{st}-stage DCI may indicate scheduling information of the 2^{nd}-stage DCI of the first data and scheduling information of the 2^{nd}-stage DCI of the second data.

It should be noted that, in this embodiment of this application, a quantity of service types and a quantity of pieces of data in multi-service or multi-data multiplexing scenarios are not limited. Generally, at least two types of services or two types of data with different reliability and/or latency may be included, for example, a URLLC service and an eMBB service may be included. This does not constitute a limitation on an application scenario of this application.

It should be noted that this application is not limited to a scenario in which eMBB and URLLC services are multiplexed. The first data and the second data may be data of different services. For example, the first data may be data of the URLLC service, and the second data may be data of the eMBB service. Because the URLLC service has higher requirements for latency and reliability than the eMBB service, the network device may determine to preferentially transmit the first data.

Alternatively, the first data and the second data may be data of different priorities. For example, a priority of the first data is higher than a priority of the second data. The network device may preferentially transmit data with a higher priority based on the different priorities of the data.

Alternatively, the first data and the second data may be data having different quality of service (quality of service, QoS) requirements. For example, the QoS requirement may include but is not limited to one or more of a reliability (for example, a packet loss rate) requirement, a latency requirement, a throughput requirement, or an availability requirement. The network device may determine, based on the QoS requirements, the first data having a higher QoS requirement, and then determine to preferentially transmit the first data on a first resource.

For example, as shown in FIG. 9, a PDCCH carries the 1^{st}-stage DCI, and the 1^{st}-stage DCI includes 1^{st}-stage DCI corresponding to the first data and 1^{st}-stage DCI corresponding to the second data. A terminal may obtain the 1^{st}-stage DCI through PDCCH blind detection.

Specifically, the first control information may include information about a resource configuration corresponding to the second control information, for example, may include information about a time domain resource, a frequency domain resource, or a space domain resource, so that the terminal may receive the second control information on a specified time-frequency-space resource based on the first control information. In addition, the first control information may further include decoding-related information corresponding to the second control information, for example, information such as a modulation order, a code rate, or a format, to indicate the decoding-related information of the second control information. Therefore, the terminal may decode the second control information based on the decoding-related information in the first control information.

Correspondingly, the terminal receives the first control information, and obtains scheduling information of the second control information.

802: The network device sends the second control information, to indicate scheduling corresponding to the plurality of pieces of data.

Specifically, the second control information may include information about resource configurations corresponding to the plurality of pieces of data, so that the terminal may obtain data on a specified resource based on the second control information. In addition, the second control information may further include information such as a modulation order, a code rate, or a format corresponding to the plurality of pieces of data, and indicate decoding-related information corresponding to the data. Therefore, the terminal may decode the data based on the decoding-related information in the second control information.

Correspondingly, the terminal receives the second control information, and obtains scheduling information of the data.

The second control information may indicate at least scheduling information corresponding to the first data and scheduling information corresponding to the second data.

For example, the second control information is carried in the 2^{nd}-stage DCI. In other words, the 2^{nd}-stage DCI may indicate the scheduling information of the first data and the scheduling information of the second data.

For example, as shown in FIG. 9, a PDSCH carries the 2^{nd}-stage DCI and data. The 2^{nd}-stage DCI includes the scheduling information of the first data and the scheduling information of the second data, for example, the 2^{nd}-stage DCI of the first data and the 2^{nd}-stage DCI of the second data. The terminal may receive the PDSCH on a time-frequency resource specified in the 1^{st}-stage DCI, to obtain the 2^{nd}-stage DCI. Further, the terminal may receive and decode the first data and the second data by using the time-frequency resource and the decoding-related information that are indicated in the 2^{nd}-stage DCI.

In addition, in a possible implementation, the PDCCH may carry the 1^{st}-stage DCI and the 2^{nd}-stage DCI. The 1^{st}-stage DCI includes the 1^{st}-stage DCI corresponding to the first data and the 1^{st}-stage DCI corresponding to the second data. The 2^{nd}-stage DCI includes the scheduling information of the first data and the scheduling information of the second data. The PDSCH carries the first data and the second data.

Specifically, in the first control information or the second control information, control information corresponding to the plurality of pieces of data may be used for separate indication or joint indication. Specifically, multi-data separate indication in the first control information means that different fields in the first control information respectively indicate scheduling information of 2^{nd}-stage DCI of different data. Alternatively, multi-data joint indication in the first control information means that the first control information includes a field, and the field jointly indicates scheduling information of 2^{nd}-stage DCI of a plurality of pieces of data.

In an implementation, the first control information may include first information and second information, and the second control information may include third information and fourth information. All or a part of the third information indicates scheduling of the first data, and all or a part of the fourth information indicates scheduling of the second data. Alternatively, in another implementation, all or a part of the third information and all or a part of the fourth information jointly indicate scheduling of the first data, and all or a part of the third information and all or a part of the fourth information jointly indicate scheduling of the second data.

It should be noted that, in the foregoing description, all information may refer to all fields (or bits) corresponding to a piece of information, and a part of information refers to some fields (or some bits) in all fields (or bits) corresponding to a piece of information.

For example, the second control information includes a plurality of fields indicating the third information. That all information of the third information indicates scheduling of the first data may mean that all fields corresponding to the third information indicate scheduling of the first data. That some indication information of the third information indicates scheduling of the first data may mean that some fields or some bits in a plurality of fields corresponding to the first information indicate scheduling of the first data.

In addition, all or a part of the first information indicates scheduling of the third information, and all or a part of the second information indicates scheduling of the fourth information. Alternatively, in another implementation, all or a part of the first information and all or a part of the second information jointly indicate scheduling of the third information, and all or a part of the first information and all or a part of the second information jointly indicate scheduling of the fourth information.

In the first control information or the second control information, either separate indication or joint indication may be used. Alternatively, in the first control information or the second control information, both the separate indication and the joint indication may be used. In other words, in the first control information or the second control information, separate indication and joint indication coexist, where a part of information included is for separate indication, for example, in a case in which the information is specific to a particular service; and another part of information is for joint indication, for example, in a case in which the information is shared by a plurality of pieces of data, or when bit resources used for joint indication are fewer.

For example, the first data is URLLC data, the second data is eMBB data, the third information includes 2^{nd}-stage DCI of the URLLC, the fourth information includes 2^{nd}-stage DCI of the eMBB, the first information includes 1^{st}-stage DCI of the URLLC, and the second information includes 1^{st}-stage DCI of the eMBB. All information of the 1^{st}-stage DCI of the URLLC indicates the 2^{nd}-stage DCI of the URLLC, or the 1^{st}-stage DCI of the URLLC and the 1^{st}-stage DCI of the eMBB jointly indicate scheduling of the second control information. Alternatively, a part of information (for example, some fields) in the 1^{st}-stage DCI of the URLLC indicates a scheduling resource of the 2^{nd}-stage DCI of the URLLC, and a part of information (for example, some fields) in the 1^{st}-stage DCI of the eMBB indicates a scheduling resource of the 2^{nd}-stage DCI of the eMBB. In addition, the first information may further include a part of information, for further jointly indicating partial scheduling information of the 2^{nd}-stage DCI of the URLLC and the 2^{nd}-stage DCI of the eMBB, for example, information such as a decoding-related MCS.

Optionally, at least one of the following indication manners may be selected for the first control information or the second control information: separate indication, joint indication, a combination of separate indication and joint indication, or the like. Different implementations may be combined. A specific indication manner is not limited in this application.

In the foregoing implementation of this application, in the multi-service or multi-data multiplexing scenario, joint indication is performed on control information corresponding to the plurality of pieces of data, for example, a two-stage DCI design for multi-data multiplexing is used, so that the terminal needs to perform blind detection for the 1^{st}-stage DCI on only one PDCCH. This makes blind detection less complex, and effectively reduces power consumption and latency in blind detection.

It should be noted that different indication manners may correspond to different encoding and decoding schemes. The following describes in detail several different encoding and decoding schemes provided in this application.

In an embodiment of this application, for first control information or second control information in multi-service or multi-data multiplexing scenarios, the following three coding schemes are provided: multi-data separate coding scheme, first multi-data joint coding scheme, and second multi-data joint coding scheme. The multi-data separate coding scheme means separate encoding and decoding on control information corresponding to a plurality of pieces of data, that is, one piece of data corresponds to one information bit string on which separate encoding and decoding is performed. For example, in the first control information, separate encoding/decoding is performed on 1^{st}-stage DCI corresponding to first data, and separate encoding/decoding is performed on 1^{st}-stage DCI corresponding to second data; or in the second control information, separate encoding/decoding is performed on 2^{nd}-stage DCI corresponding to the first data, and separate encoding/decoding is performed on 2^{nd}-stage DCI corresponding to the second data.

For example, if the multi-data separate coding scheme is used for the second control information. To be specific, a transmit end performs separate encoding based on different data corresponding to different indication information. A receive end may separately decode a specified bit in a received signal using an indicated coding scheme. For example, the receive end may perform separate decoding based on third information and perform separate decoding based on fourth information.

For example, a PDSCH includes 2^{nd}-stage DCI, and the 2^{nd}-stage DCI includes URLLC-related 2^{nd}-stage DCI and eMBB-related 2^{nd}-stage DCI. Separate encoding is performed on the URLLC-related 2^{nd}-stage DCI to obtain a bit string 1, and separate encoding is performed on the eMBB-related 2^{nd}-stage DCI to obtain a bit string 2. In this way, a bit sequence, including the bit string 1 and the bit string 2, corresponding to the 2^{nd}-stage DCI is obtained. Correspondingly, the receive end may separately decode the bit string 1 to obtain the URLLC-related 2^{nd}-stage DCI, and separately decode the bit string 2 to obtain the eMBB-related 2^{nd}-stage DCI.

Similarly, if the multi-data separate coding scheme is used for the first control information, that is, the transmit end separately encodes the first information and separately encodes the second information. Correspondingly, the receive end may perform separate decoding based on the first information and perform separate decoding based on the second information. For example, a PDCCH includes 1^{st}-stage DCI, and the 1^{st}-stage DCI includes URLLC-related 1^{st}-stage DCI and eMBB-related 1^{st}-stage DCI. Separate encoding is performed on the URLLC-related 1^{st}-stage DCI to obtain a bit string 1, and separate encoding is performed on the eMBB-related 1^{st}-stage DCI to obtain a bit string 2. In this way, a bit sequence, including the bit string 1 and the bit string 2, corresponding to the 1^{st}-stage DCI is obtained. Correspondingly, the receive end may separately decode the bit string 1 to obtain the URLLC-related 1^{st}-stage DCI, and separately decode the bit string 2 to obtain the eMBB-related 1^{st}-stage DCI.

In addition, the first multi-data joint coding scheme refers to that the transmit end performs joint encoding once based on control information of a plurality of services. Correspondingly, the receive end may perform joint decoding based on received information. The second multi-data joint coding scheme refers to that the transmit end performs separate encoding once and joint encoding once on control information of a plurality of services, that is, performs encoding twice. Correspondingly, the receive end may perform self-decoding based on received information, and then perform joint decoding, thereby improving decoding reliability.

For example, if the first multi-data joint coding scheme is used for the first information and the second information, the receive end may perform joint decoding based on the first information and the second information. If the first multi-data joint coding scheme is used for the third information and the fourth information, the receive end may perform joint decoding based on the third information and the fourth information.

Optionally, the first information and the second information may jointly indicate information about a first resource jointly occupied by the third information and the fourth information and a ratio between a code length corresponding to the third information and a code length corresponding to the fourth information. The code length is a length of information bits after channel coding. The receive end may receive the second control information, distinguish between the bit length corresponding to the third information and the bit length corresponding to the fourth information that are included in the second control information, and then perform decoding separately.

Optionally, the first information and the second information may jointly indicate the information about the first resource jointly occupied by the third information and the fourth information and a relationship between a resource corresponding to the third information and a resource corresponding to the fourth information. The receive end may receive the second control information, distinguish between the resource corresponding to the third information and the resource corresponding to the fourth information that are included in the second control information, and then perform decoding separately.

For example, the 1^{st}-stage DCI (that is, the 1^{st}-stage DCI of the first data and the 1^{st}-stage DCI of the second data) jointly indicates a total time-frequency-space resource, a modulation order, a code rate, or a format of 2^{nd}-stage DCI of the first data and 2^{nd}-stage DCI of the second data. In addition, the 1^{st}-stage DCI may further indicate a ratio between an information bit length of the 2^{nd}-stage DCI of the first data and an information bit length of the 2^{nd}-stage DCI of the second data, so that the receive end distinguishes between the information bit length of the 2^{nd}-stage DCI of the first data and the information bit length of the 2^{nd}-stage DCI of the second data.

In another implementation, optionally, the first information and the second information may further jointly indicate at least one of the following: a relationship between a second resource occupied by the third information and the first resource, a relationship between a modulation and coding scheme (Modulation and Coding Scheme, MCS) index value corresponding to the third information and an MCS index value corresponding to the fourth information, or a first index table. The first index table includes correspondences between a plurality of index values, and an MCS index value corresponding to third information and an MCS index value corresponding to fourth information, to determine, based on the index values, MCSs corresponding to the 2^{nd}-stage DCI of different services. Different MCS index values corresponding to the third information correspond to different code rates and/or modulation schemes, and different MCS index values corresponding to the fourth information correspond to different code rates and/or modulation schemes.

Optionally, the foregoing information may alternatively be predefined, that is, preconfigured by a network device for a terminal. For example, the 1^{st}-stage DCI jointly indicates a total time-frequency resource of the 2^{nd}-stage DCI of the first data and the 2^{nd}-stage DCI of the second data, and a relationship between a time-frequency resource occupied by the 2^{nd}-stage DCI of the first data and the total time-frequency resource is predefined. For example, the time-frequency resource occupied by the 2^{nd}-stage DCI of the first data is 1/3 of the total time-frequency resource. Information about a start time-frequency resource is agreed. Correspondingly, the receive end may determine, based on the predefined resource configuration and information such as the total time-frequency resource indicated by the 1^{st}-stage DCI, time-frequency resources respectively occupied by the 2^{nd}-stage DCI of the first data and the 2^{nd}-stage DCI of the second data.

In another implementation, optionally, the first information and the second information may further jointly indicate at least one of the following: information about the first resource occupied by the third information and the fourth information; and a first index value, where the first index value indicates an MCS index value corresponding to the third information and/or an MCS index value corresponding to the fourth information. Correspondingly, the receive end may determine, based on the predefined resource configuration and joint indication of the first information and the second information, related information such as a resource and an MCS related to decoding of the third information and the fourth information.

In an implementation, in the first multi-data joint coding scheme, the transmit end may map coded symbols of different data to bits with different reliability based on reliability requirements of the data. Specifically, control information corresponding to data having a high reliability requirement may be mapped to a to-be-encoded bit string with high reliability, and control information corresponding to data having a low reliability requirement may be mapped to a to-be-encoded bit string with low reliability.

For example, if a reliability requirement corresponding to the first data is higher than that corresponding to the second data, in the first control information, coding reliability corresponding to a bit that carries the first information is higher than coding reliability corresponding to a bit that carries the second information. As shown in FIG. 10, in the first control information, the 1^{st}-stage DCI of the first data, namely, the first information, is mapped to a to-be-encoded bit string with high reliability, and the 1^{st}-stage DCI of the second data, namely, the second information, is mapped to a to-be-encoded bit string with low reliability.

For another example, if a reliability requirement corresponding to the first data is higher than that corresponding to the second data, in the second control information, coding reliability corresponding to a bit that carries the third information is higher than coding reliability corresponding to a bit that carries the fourth information. As shown in FIG. 10, in the second control information, the 2^{nd}-stage DCI of the first data, namely, the third information, is mapped to a to-be-encoded bit string with high reliability, and the 2^{nd}-stage DCI of the second data, namely, the fourth information, is mapped to a to-be-encoded bit string with low reliability.

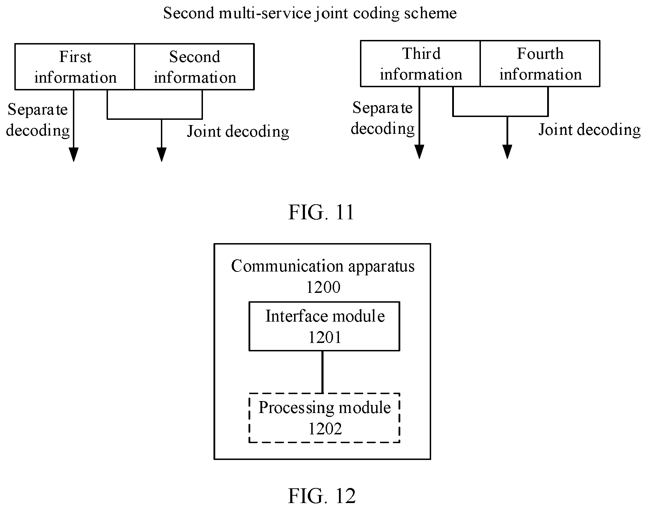

In another implementation, if the second multi-data joint coding scheme is used for the third information and the fourth information, the receive end may perform separate decoding based on the third information, and perform joint decoding based on the third information and the fourth information. If the second multi-data joint coding scheme is used for the first information and the second information, the receive end may perform separate decoding based on the first information, and perform joint decoding based on the first information and the second information. Details are shown in FIG. 11.

The following separately describes indication manners of first control information and second control information and several different encoding and decoding schemes with reference to specific implementations. In the following implementation, a multi-data scenario in which first data and second data are multiplexed is used as an example for description. For example, the first data may be URLLC data and the second data is eMBB data. This does not constitute a limitation on an application scenario of this application.

### 1. First control information (1^{st} DCI)

### 1. A multi-data separate coding scheme is used for second control information

1.1. Separate indication: The 1^{st}-stage DCI includes 1^{st}-stage DCI of first data and 1^{st}-stage DCI of second data. The 1^{st}-stage DCI of the first data indicates resource configuration information, decoding-related information, and the like of the 2^{nd}-stage DCI of the first data.

As described above, the resource configuration information may include a time-frequency-space resource, and the decoding-related information may include at least one of the following scheduling information: a modulation order, a code rate, or a format. The 1^{st}-stage DCI of the second data indicates resource configuration information, decoding-related information, and the like of 2^{nd}-stage DCI of the second data.

1.2. Joint indication: The 1^{st}-stage DCI indicates resource configuration information, decoding-related information, and the like of the 2^{nd}-stage DCI of the first data and the 2^{nd}-stage DCI of the second data.

Manner 1: The 1^{st}-stage DCI jointly indicates a total resource configuration of the 2^{nd}-stage DCI of the first data and the 2^{nd}-stage DCI of the second data, and a relationship between a resource used by the 2^{nd}-stage DCI of the first data and the total resource is predefined or is jointly indicated by the 1^{st}-stage DCI as indicated.

For example, a network device may indicate, to a terminal, a start time-frequency resource and an end time-frequency resource used by the 2^{nd}-stage DCI of the first data, or indicate or predefine, in a standard, that a time domain resource used by the 2^{nd}-stage DCI of the first data is 1/3 of a total time domain resource and a start time domain resource, or indicate or predefine, in a standard, that a frequency domain resource used by the 2^{nd}-stage DCI of the first data is 1/3 of a total frequency domain resource and a start frequency domain resource.

Manner 2: The 1^{st}-stage DCI jointly indicates an MCS index value of the 2^{nd}-stage DCI of the first data, and indicates or agrees on a relationship between an MCS index value of the 2^{nd}-stage DCI of the second data and the MCS index value of the 2^{nd}-stage DCI of the first data. For example, the MCS index value of the 2^{nd}-stage DCI of the second data is 5 greater than the MCS index value of the 2^{nd}-stage DCI of the first data, so that the MCS index value of the 2^{nd}-stage DCI of the second data can be determined based on the relationship.

Generally, an MCS configuration table is agreed on in a standard, and each MCS index value is associated with information such as a corresponding code rate and a corresponding modulation order.

Manner 3: The 1^{st}-stage DCI jointly indicates a multi-data MCS index table. For example, each index value in the index table indicates a corresponding MCS index value of the 2^{nd}-stage DCI of the first data, a corresponding MCS index value of the 2^{nd}-stage DCI of the second data, and the like. Different MCS index values of the 2^{nd}-stage DCI of the first data correspond to different code rates and modulation schemes, and different MCS index values of the 2^{nd}-stage DCI of the second data correspond to different code rates and modulation schemes.

Alternatively, the 1^{st}-stage DCI jointly indicates a multi-data MCS index table. For example, each index value in the index table indicates a corresponding code rate and a corresponding modulation scheme of URLLC-related 2^{nd}-stage DCI, a corresponding code rate and a corresponding modulation scheme of eMBB-related 2^{nd}-stage DCI, and the like.

**Table 1: MCS index table of multi-data 2^{nd}-stage DCI**

| Index value | MCS index value of the 2^{nd}-stage DCI of the first data | MCS index value of the 2^{nd}-stage DCI of the second data |
|---|---|---|
| 0 | 0 | 4 |
| 1 | 1 | 5 |
| 2 | 2 | 6 |

2. A first multi-data joint coding scheme is used for the second control information, and a receive end jointly decodes the 2^{nd}-stage DCI of the first data and the 2^{nd}-stage DCI of the second data.

### 2.1. Joint indication:

The 1^{st}-stage DCI jointly indicates resource configuration information, decoding-related information, and the like of the 2^{nd}-stage DCI of the first data and the 2^{nd}-stage DCI of the second data. In addition, the 1^{st}-stage DCI further indicate a ratio between an information bit length of the 2^{nd}-stage DCI of the first data and an information bit length of the 2^{nd}-stage DCI of the second data, so that the receive end distinguishes between the information bit length of the 2^{nd}-stage DCI of the first data and the information bit length of the 2^{nd}-stage DCI of the second data.

Specifically, for the encoding and decoding scheme, a transmit end may jointly encode the 1^{st}-stage DCI, and the receive end may jointly decode the 1^{st}-stage DCI, to determine the information bit length of the 2^{nd}-stage DCI of the first data and the information bit length of the 2^{nd}-stage DCI of the second data.

3. A second multi-data joint coding scheme is used for the second control information, and the receive end self-decodes the 2^{nd}-stage DCI of the first data, and jointly decodes the 2^{nd}-stage DCI of the first data and the 2^{nd}-stage DCI of the second data.

### 3.1. Separate indication:

The 1^{st}-stage DCI includes the 1^{st}-stage DCI of the first data and the 1^{st}-stage DCI of the second data. The 1^{st}-stage DCI of the first data indicates resource configuration information, decoding-related information, and the like of the 2^{nd}-stage DCI of the first data. The 1^{st}-stage DCI of the second data indicates resource configuration information, decoding-related information, and the like corresponding to the 2^{nd}-stage DCI that is jointly encoded for the first data and the second data.

### 3.2. Joint indication:

Manner 1: The 1^{st}-stage DCI jointly indicates a total time-frequency-space resource corresponding to the 2^{nd}-stage DCI, and a relationship between a time-frequency-space resource used by the 2^{nd}-stage DCI of the first data and the total time-frequency-space resource is predefined or is jointly indicated by the 1^{st}-stage DCI.

Manner 2: The 1 ^{st}-stage DCI jointly indicates an MCS index value of the 2^{nd}-stage DCI, and indicates or agrees on a relationship between the MCS index value of the 2^{nd}-stage DCI that is jointly encoded for the first data and the second data and the MCS index value of the 2^{nd}-stage DCI of the first data, so that the MCS index value of the 2^{nd}-stage DCI that is jointly encoded for the first data and the second data can be determined based on the relationship.

Manner 3: The 1^{st}-stage DCI jointly indicates a multi-data MCS index table. For example, each index value in the index table indicates a corresponding MCS index value of the 2^{nd}-stage DCI of the first data, an MCS index value or a modulation order, or a code rate/format of the 2^{nd}-stage DCI that is jointly encoded for the first data and the second data, and the like.

For a specific manner of joint indication, refer to related descriptions described in 1.2. Details are not described herein again.

Specifically, in the encoding and decoding scheme, the 1^{st}-stage DCI of the first data includes an information part and an information part related to encoding and decoding, and the 1^{st}-stage DCI of the second data includes an information part and an information part related to encoding and decoding. The transmit end may separately encode the 1^{st}-stage DCI of the first data, and perform joint encoding based on the 1^{st}-stage DCI of the first data and the 1^{st}-stage DCI of the second data. Correspondingly, after determining code lengths respectively corresponding to the 1^{st}-stage DCI of the first data and the 1^{st}-stage DCI of the second data, the receive end may perform separate decoding based on the 1^{st}-stage DCI of the first data, and perform joint decoding based on the 1^{st}-stage DCI of the first data and the 1^{st}-stage DCI of the second data.

In the foregoing implementation, in the 1^{st}-stage DCI design in a multi-data multiplexing scenario, joint encoding/joint decoding may be performed on the 1^{st}-stage DCI of the first data (signaling related to the 2^{nd}-stage DCI of the first data) and the 1^{st}-stage DCI of the second data (signaling related to the 2^{nd}-stage DCI of the second data), so that a PDCCH having a fixed-size format (compared with an existing long format of PDCCH) can be implemented. For a plurality of pieces of data, blind detection on only one PDCCH is needed, and one PDCCH needs to be jointly decoded only once. This can make blind detection less complex, and reduce power consumption and latency in blind detection.

In addition, in an implementation of multi-data joint coding, joint decoding may be used for 1^{st}-stage DCI with a relatively short code length in the plurality of pieces of data, for example, 1^{st}-stage DCI of an URLLC service, to obtain a long code gain. Coded symbols of different data may be mapped to bits with different reliability based on reliability requirements of the data. For example, a 1^{st}-stage DCI information field of the URLLC service is mapped to a to-be-encoded bit string with high reliability, so that coding reliability can be improved and decoding latency is relatively low.

### 2. Second control information (2^{nd} DCI)

### 1. A multi-data separate coding scheme is used for data

1.1. Separate indication: 2^{nd}-stage DCI includes 2^{nd}-stage DCI of first data and 2^{nd}-stage DCI of second data. The 2^{nd}-stage DCI of the first data indicates scheduling information such as a time-frequency-space resource, a modulation order, and a code rate/format of the first data. The 2^{nd}-stage DCI of the second data indicates scheduling information such as a time-frequency-space resource, a modulation order, and a code rate/format of the second data.

1.2. Joint indication: The 2^{nd}-stage DCI jointly indicates scheduling information such as time-frequency-space resources, a modulation order, a code rate, or a format of the first data and the second data.

2. A first multi-data joint coding scheme is used for data, and a receive end jointly decodes the first data and the second data.

### 2.1. Joint indication:

The 2^{nd}-stage DCI of the first data and the 2^{nd}-stage DCI of the second data jointly indicate scheduling information such as a total time-frequency-space resource, a modulation order, a code rate, or a format of the first data and the second data. In addition, the 2^{nd}-stage DCI of the first data and the 2^{nd}-stage DCI of the second data further jointly indicate a ratio between an information length of the first data and an information length of the second data, so that the receive end can distinguish between the information lengths of the first data and the second data.

An information bit mapping rule for the 2^{nd}-stage DCI may be based on reliability requirements of the data. Coded symbols of different data may be mapped to bits with different reliability based on reliability requirements of the data. For example, the 2^{nd}-stage DCI of the first data is mapped to a to-be-encoded bit string with high reliability, and the 2^{nd}-stage DCI of the second data is mapped to a to-be-encoded bit string with low reliability.

In the foregoing embodiment of this application, the 2^{nd}-stage DCI of a plurality of data is encoded once, resulting in low encoding complexity. In addition, the 2^{nd}-stage DCI of the plurality of data is decoded once, resulting in shorter decoding latency. For example, the 2^{nd}-stage DCI of the first data and the 2^{nd}-stage DCI of the second data are jointly decoded. This implementation is applicable to a scenario having a relatively high reliability requirement, or a scenario with a common channel environment.

3. A second multi-data joint coding scheme is used for data, and the receive end self-decodes the first data, and jointly decodes the first data and the second data.

### 3.1. Separate indication:

The 2^{nd}-stage DCI includes the 2^{nd}-stage DCI of the first data and the 2^{nd}-stage DCI of the second data. The 2^{nd}-stage DCI of the first data indicates the scheduling information such as a time-frequency-space resource, a modulation order, and a code rate/format of the first data. The 2^{nd}-stage DCI that is jointly encoded for the first data and the second data indicates scheduling information such as a time-frequency-space resource, a modulation order, and a code rate/format for joint coding of the first data and the second data.

### 3.2. Joint indication:

For a specific manner of joint indication, refer to related descriptions described in 1.2. Details are not described herein again.

The information bit mapping rule for the 2^{nd}-stage DCI may be based on reliability requirements of the data. For example, if a reliability requirement of the first data is higher than that of the second data, the 2^{nd}-stage DCI of the first data may be mapped to a to-be-encoded bit string with high reliability, and the 2^{nd}-stage DCI of the second data may be mapped to a to-be-encoded bit string with low reliability.

In addition, in the second multi-data joint coding scheme, the 2^{nd}-stage DCI of the first data includes an information field part and an information part related to encoding and decoding, and the 2^{nd}-stage DCI of the second data includes an information field part and an information part related to encoding and decoding. A transmit end may separately encode the 2^{nd}-stage DCI of the first data, and perform joint encoding based on the 2^{nd}-stage DCI of the first data and the 2^{nd}-stage DCI of the second data.

In the foregoing implementation, in the 2^{nd}-stage DCI design in a multi-data multiplexing scenario, for 2^{nd}-stage DCI with a shorter code length in the 2^{nd}-stage DCI of multi-data, a manner of joint decoding or a combination of separate decoding and joint decoding may be used. For example, separate decoding of the 2^{nd}-stage DCI of the first data can reduce decoding latency, but reliability is relatively low. This is applicable to a scenario in which a channel environment is relatively good. The manner of joint decoding of short code and long code can obtain a long code gain, improve encoding and decoding reliability, and is applicable to a service that has a relatively high reliability requirement, for example, a URLLC service.

The foregoing content of this application provides a plurality of specific implementations. A transmit end and a receive end need to determine a scheduling manner and a coding scheme to be used in a current transmission period, for example, to use an existing scheduling manner based on a single service, or use a multi-data scheduling manner provided in the foregoing embodiment of this application. Further optionally, a specific encoding and decoding scheme may be further indicated.

In an implementation, the communication method provided in this application may further include: A network device sends first indication information to a terminal, or a network device and/or a terminal obtain first indication information from a higher layer. The first indication information indicates whether first control information and second control information are used to jointly indicate scheduling of a plurality of pieces of data. In other words, if the first indication information indicates that the first control information and the second control information are used to jointly indicate scheduling of the plurality of pieces of data, the terminal may determine that the received first control information and second control information may include scheduling information of the plurality of pieces of data. If the first indication information indicates the first control information and the second control information are not used to jointly indicate scheduling of the plurality of pieces of data, scheduling of the different data may be carried in different control information. For example, 1^{st}-stage DCI of first data and 1^{st}-stage DCI of second data are separately sent, separate encoding/separate decoding are performed on the 1^{st}-stage DCI of the first data and the 1^{st}-stage DCI of the second data, 2^{nd}-stage DCI of the first data and 2^{nd}-stage DCI of the second data are separately sent, and separate encoding/separate decoding are performed on the 2^{nd}-stage DCI of the first data and the 2^{nd}-stage DCI of the second data.

In an implementation, the first indication information may be carried in radio resource control (Radio Resource Control, RRC) signaling.

Further optionally, if the first indication information indicates that the first control information and the second control information are used to jointly indicate scheduling of the plurality of pieces of user data, the method may further include: the network device sends second indication information to the terminal; or the network device and/or the terminal obtains the second indication information from the higher layer. The second indication information indicates that a coding scheme of the second control information is the first multi-data joint coding scheme, the second multi-data joint coding scheme, or a multi-data separate coding scheme. The second indication information may be carried in higher layer signaling or physical layer signaling.

In an implementation, the second indication information may be carried in RRC signaling or the first control information, for example, the 1^{st}-stage DCI.

For example, the 1^{st}-stage DCI or RRC carries the second indication information, to indicate that a coding scheme for the 2^{nd}-stage DCI is as follows:
00 indicates the first multi-data joint coding scheme: in which the 2^{nd}-stage DCI of the first data and the 2^{nd}-stage DCI of the second data are jointly encoded and jointly decoded;
01 indicates the second multi-data joint coding scheme: in which the 2^{nd}-stage DCI of the first data and the 2^{nd}-stage DCI of the second data are jointly encoded, the 2^{nd}-stage DCI of the first data is separately decoded, and the 2^{nd}-stage DCI of the first data and the 2^{nd}-stage DCI of the second data are jointly decoded; or
10 indicates the multi-data separate coding scheme: in which the 2^{nd}-stage DCI of the first data and the 2^{nd}-stage DCI of the second data are separately encoded and decoded.

In the foregoing implementation, through flexible indication, the transmit end and the receive end can agree on a scheduling manner and an encoding/decoding scheme for a multi-data multiplexing scenario, thereby improving flexibility and communication efficiency.

In addition, based on the foregoing implementation, a receive end further needs to determine, based on a standard predefined algorithm, a length of information bits for transmission of each service in the 2^{nd}-stage DCI in joint scheduling of multi-data multiplexing, that is, calculate a transport block size (Transport block size, TBS) corresponding to each service. The method is also applicable to TBS calculation of each service data. The following describes several TBS calculation methods.

Method 1: For different services, a quantity of information bits corresponding to data may be calculated based on a total quantity of available resource elements (Resource element, RE) and an MCS configuration, for example, 2^{nd}-stage DCI of first data, and a code rate and a modulation order that correspond to the MCS.

For example, for the 2^{nd}-stage DCI of the first data, a length Ninfl of information bits in the 2^{nd}-stage DCI of the first data may be represented as Ninfl = REs1*Q1*R1*V1. REs1 represents a quantity of REs occupied by the 2^{nd}-stage DCI of the first data. Q1 represents a modulation order corresponding to the 2^{nd}-stage DCI of the first data. R1 represents a code rate corresponding to the 2^{nd}-stage DCI of the first data. V1 represents a quantity of layers corresponding to the 2^{nd}-stage DCI of the first data.

Similarly, for 2^{nd}-stage DCI of second data, a length Ninf2 of information bits in the 2^{nd}-stage DCI of the second data may be represented as Ninf2 = REs2*Q2*R2*V2. Res2 represents a quantity of REs occupied by the 2^{nd}-stage DCI of the second data. Q2 represents a modulation order corresponding to the 2^{nd}-stage DCI of the second data. R2 represents a code rate corresponding to the 2^{nd}-stage DCI of the second data. V2 represents a quantity of layers corresponding to the 2^{nd}-stage DCI of the second data.

Then, for different data, corresponding TBSs may be obtained by separately querying a table based on the calculated quantity of information bits.

Method 2: Based on indication information of a modulation format in 1^{st}-stage DCI of the first data and indication information of a modulation format in 1^{st}-stage DCI of the second data, a length of information bits in the 2^{nd}-stage DCI of the first data and a length of information bits in the 2^{nd}-stage DCI of the second data may be respectively determined, for example, Ninfl and Ninf2 are obtained.

Then, for different data, corresponding TBSs may be obtained by separately querying the table based on the obtained quantity of information bits.

The possible implementations mentioned above in this application may be combined if the solutions are not contradictory. This is not limited in this application.

The foregoing mainly describes the solutions provided in this application from a perspective of interaction between a transmit end and a receive end. Correspondingly, this application further provides a communication apparatus. The communication apparatus may be the terminal in the foregoing method embodiment, or may be a component that can be used in the terminal. Alternatively, the communication apparatus may be the network device in the foregoing method embodiment, or may be a component that can be used in the network device. It may be understood that to implement the foregoing functions, the foregoing network device or terminal includes corresponding hardware structures and/or software modules for implementing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that the foregoing describes interaction between network elements by merely using the network device and the terminal as an example. In practice, processing performed by the terminal is not limited to being performed only by a single network element, and processing performed by the network device is not limited to being performed only by a single network element. For example, processing performed by the network device may be performed by at least one of a central unit (central unit, CU), a distributed unit (Distributed Unit, DU), and an RU.

In this application, the network device or the terminal device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It can be understood that division into the modules in this application is an example, and is merely logical function division. During actual implementation, another division manner may be used.

For example, when the functional modules are obtained through division in an integrated manner, FIG. 12 is a diagram of a structure of a communication apparatus 1200. The communication apparatus 1200 includes an interface module 1201.

For example, the communication apparatus 1200 may be configured to implement functions of the terminal in the foregoing embodiments.

The interface module 1201 is configured to receive first control information, where the first control information indicates scheduling of second control information corresponding to a plurality of pieces of data, and the plurality of pieces of data include at least first data and second data. The interface module 1201 is further configured to receive the second control information, where the second control information indicates scheduling of the plurality of pieces of data.

In an implementation, the second control information includes third information and fourth information. All or a part of the third information indicates scheduling corresponding to the first data, and all or a part of the fourth information indicates scheduling corresponding to the second data. Alternatively, all or a part of the third information and all or a part of the fourth information jointly indicate scheduling corresponding to the first data, and all or a part of the third information and all or a part of the fourth information jointly indicate scheduling corresponding to the second data.

In an implementation, the first control information includes first information and second information, and the second control information includes the third information and the fourth information. All or a part of the first information indicates scheduling of the third information, and all or a part of the second information indicates scheduling of the fourth information. Alternatively, all or a part of the first information and all or a part of the second information jointly indicate scheduling of the third information, and all or a part of the first information and all or a part of the second information jointly indicate scheduling of the fourth information. All or a part of the third information indicates scheduling corresponding to the first data, and all or a part of the fourth information indicates scheduling corresponding to the second data. Alternatively, all or a part of the third information and all or a part of the fourth information jointly indicate scheduling corresponding to the first data, and all or a part of the third information and all or a part of the fourth information jointly indicate scheduling corresponding to the second data.

In an implementation, coding reliability corresponding to a bit that carries the first information is higher than coding reliability corresponding to a bit that carries the second information, and a reliability requirement corresponding to the first data is higher than a reliability requirement corresponding to the second data.

In an implementation, coding reliability corresponding to a bit that carries the third information is higher than coding reliability corresponding to a bit that carries the fourth information, and a reliability requirement corresponding to the first data is higher than a reliability requirement corresponding to the second data.

In an implementation, if a first multi-data joint coding scheme is used for the first information and the second information, the communication apparatus 1200 further includes a processing module 1202, configured to perform joint decoding based on the first information and the second information; or if the first multi-data joint coding scheme is used for the third information and the fourth information, the processing module 1202 is further configured to perform joint decoding based on the third information and the fourth information.

In an implementation, if a second multi-data joint coding scheme is used for the third information and the fourth information, the communication apparatus 1200 further includes a processing module 1202, configured to perform separate decoding based on the third information, and performing joint decoding based on the third information and the fourth information; or if the second multi-data joint coding scheme is used for the first information and the second information, the processing module 1202 is configured to perform separate decoding based on the first information, and performing joint decoding based on the first information and the second information.

In an implementation, the interface module 1201 is further configured to obtain first indication information, where the first indication information indicates whether the first control information and the second control information are used to jointly indicate scheduling of the plurality of pieces of data.

In an implementation, if the first indication information indicates that the first control information and the second control information are used to jointly indicate scheduling of the plurality of pieces of data, the interface module 1201 is further configured to obtain second indication information, where the second indication information indicates that a coding scheme of the second control information is the first multi-data joint coding scheme, the second multi-data joint coding scheme, or a multi-data separate coding scheme.

In an implementation, if the multi-data separate coding scheme is used for the third information and the fourth information, the communication apparatus 1200 further includes the processing module 1202, configured to: perform separate decoding based on the third information, and perform separate decoding based on the fourth information.

In an implementation, the first information and the second information jointly indicate information about a first resource jointly occupied by the third information and the fourth information and a ratio between a code length corresponding to the third information and a code length corresponding to the fourth information.

In an implementation, the first information and the second information jointly indicate at least one of the following: information about the first resource occupied by the third information and the fourth information; and a first index value, where the first index value indicates an MCS index value corresponding to the third information and/or an MCS index value corresponding to the fourth information.

In an implementation, the first information and the second information further jointly indicate at least one of the following: a relationship between a second resource occupied by the third information and the first resource; a relationship between the MCS index value corresponding to the third information and the MCS index value corresponding to the fourth information; and a first index table, where the first index table includes correspondences between a plurality of index values, and an MCS index value corresponding to third information and an MCS index value corresponding to fourth information.

In an implementation, the first control information is carried in 1st-stage downlink control information DCI, and the second control information is carried in 2^{nd}-stage DCI.

In addition, the communication apparatus 1200 may be further configured to implement a function of the network device in the foregoing embodiment.

The interface module 1201 is configured to: send first control information, where the first control information indicates scheduling of second control information corresponding to a plurality of pieces of data, and the plurality of pieces of data include at least first data and second data; and send the second control information, where the second control information indicates scheduling of the plurality of pieces of data.

In an implementation, the second control information includes third information and fourth information. All or a part of the third information indicates scheduling corresponding to the first data, and all or a part of the fourth information indicates scheduling corresponding to the second data. Alternatively, all or a part of the third information and all or a part of the fourth information jointly indicate scheduling corresponding to the first data, and all or a part of the third information and all or a part of the fourth information jointly indicate scheduling corresponding to the second data.

In an implementation, the first control information includes first information and second information, and the second control information includes the third information and the fourth information. All or a part of the first information indicates scheduling of the third information, and all or a part of the second information indicates scheduling of the fourth information. Alternatively, all or a part of the first information and all or a part of the second information jointly indicate scheduling of the third information, and all or a part of the first information and all or a part of the second information jointly indicate scheduling of the fourth information. All or a part of the third information indicates scheduling corresponding to the first data, and all or a part of the fourth information indicates scheduling corresponding to the second data. Alternatively, all or a part of the third information and all or a part of the fourth information jointly indicate scheduling corresponding to the first data, and all or a part of the third information and all or a part of the fourth information jointly indicate scheduling corresponding to the second data.

In an implementation, coding reliability corresponding to a bit that carries the first information is higher than coding reliability corresponding to a bit that carries the second information, and a reliability requirement corresponding to the first data is higher than a reliability requirement corresponding to the second data.

In an implementation, coding reliability corresponding to a bit that carries the third information is higher than coding reliability corresponding to a bit that carries the fourth information, and a reliability requirement corresponding to the first data is higher than a reliability requirement corresponding to the second data.

In an implementation, if a first multi-data joint coding scheme is used for the first information and the second information, the communication apparatus 1200 further includes a processing module 1202, configured to perform joint encoding based on the first information and the second information; or if the first multi-data joint coding scheme is used for the third information and the fourth information, the processing module 1202 is further configured to perform joint encoding based on the third information and the fourth information.

In an implementation, if a second multi-data joint coding scheme is used for the third information and the fourth information, the communication apparatus 1200 further includes a processing module 1202, configured to perform separate encoding based on the third information, and perform joint encoding based on the third information and the fourth information; or if the second multi-data joint coding scheme is used for the first information and the second information, the processing module 1202 is configured to: perform separate encoding based on the first information, and perform joint encoding based on the first information and the second information.

In an implementation, the interface module 1201 is further configured to obtain first indication information, where the first indication information indicates whether the first control information and the second control information are used to jointly indicate scheduling of the plurality of pieces of data.

In an implementation, if the first indication information indicates that the first control information and the second control information are used to jointly indicate scheduling of the plurality of pieces of data, the interface module 1201 is further configured to obtain second indication information, where the second indication information indicates that a coding scheme of the second control information is the first multi-data joint coding scheme, the second multi-data joint coding scheme, or a multi-data separate coding scheme.

In an implementation, if the multi-data separate coding scheme is used for the third information and the fourth information, the communication apparatus 1200 further includes the processing module 1202, configured to: perform separate encoding based on the third information, and perform separate encoding based on the fourth information.

In an implementation, the first information and the second information jointly indicate information about a first resource jointly occupied by the third information and the fourth information and a ratio between a code length corresponding to the third information and a code length corresponding to the fourth information.

In an implementation, the first information and the second information jointly indicate at least one of the following: information about the first resource occupied by the third information and the fourth information; and a first index value, where the first index value indicates an MCS index value corresponding to the third information and/or an MCS index value corresponding to the fourth information.

In an implementation, the first information and the second information further jointly indicate at least one of the following: a relationship between a second resource occupied by the third information and the first resource; a relationship between the MCS index value corresponding to the third information and the MCS index value corresponding to the fourth information; and a first index table, where the first index table includes correspondences between a plurality of index values, and an MCS index value corresponding to third information and an MCS index value corresponding to fourth information.

In an implementation, the first control information is carried in 1st-stage downlink control information DCI, and the second control information is carried in 2^{nd}-stage DCI.

When the communication apparatus 1200 is configured to implement functions of the transmit end or the receive end in the foregoing embodiments, for other functions that can be implemented by the communication apparatus 1200, refer to the related descriptions of the embodiment shown in FIG. 8. Details are not described again.

In a simple embodiment, a person skilled in the art may figure out that the communication apparatus 1200 may be in the form shown in FIG. 6. For example, the processor 601 in FIG. 6 may invoke computer-executable instructions stored in the memory 603, to cause the communication apparatus 1200 to perform the method in the foregoing method embodiment.

For example, a function/implementation process of the interface module 1201 in FIG. 12 may be implemented by using the communication interface 604 in FIG. 6. For another example, a function/implementation process of the processing module 1202 in FIG. 12 may be implemented by using the processor 601 in FIG. 6.

It can be understood that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into a SoC (system on chip) or an ASIC, or may be an independent semiconductor chip. The processor includes a core for executing software instructions to perform operations or processing, and may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, the chip system further includes a memory. Optionally, the chip system may include a chip, or may include a chip and another discrete component. This is not specifically limited in this application.

Optionally, this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk drive or a memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or some of procedures in the foregoing method embodiments may be implemented by a computer program instructing related hardware. The program may be stored in the foregoing computer program product. When the program is executed, the procedures in the foregoing method embodiments may be included.

Optionally, this application further provides computer instructions. All or some of the procedures in the foregoing method embodiments may be completed by computer instructions instructing related hardware (for example, a computer, a processor, a network device, or a terminal). The program may be stored in the foregoing computer-readable storage medium or the foregoing computer program product.

Optionally, this application further provides a communication system, including the network device and the terminal in the foregoing embodiments.

Based on the descriptions of the implementations, a person skilled in the art may clearly understand that for the purpose of convenient and brief descriptions, division into the foregoing functional modules is merely used as an example for descriptions. During actual application, the functions may be allocated to different functional modules for implementation based on a requirement. In other words, an inner structure of an apparatus is divided into different functional modules to implement all or some of the functions described above.

In the several embodiments provided in this application, it should be understood that the disclosed apparatus and method may be implemented in other manners. For example, the foregoing apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, that is, the parts may be located in one place or distributed in different places. Some or all of the units may be selected depending on actual requirements to achieve the objectives of the solutions in the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving first control information, wherein the first control information indicates scheduling of second control information corresponding to a plurality of pieces of data, and the plurality of pieces of data comprise at least first data and second data; and
receiving the second control information, wherein the second control information indicates scheduling of the plurality of pieces of data.

2. The method according to claim 1, wherein the second control information comprises third information and fourth information, wherein
all or a part of the third information indicates scheduling corresponding to the first data, and all or a part of the fourth information indicates scheduling corresponding to the second data; or
all or a part of the third information and all or a part of the fourth information jointly indicate scheduling corresponding to the first data, and all or a part of the third information and all or a part of the fourth information jointly indicate scheduling corresponding to the second data.

3. The method according to claim 1 or 2, wherein the first control information comprises first information and second information, and the second control information comprises the third information and the fourth information, wherein
all or a part of the first information indicates scheduling of the third information, and all or a part of the second information indicates scheduling of the fourth information; or
all or a part of the first information and all or a part of the second information jointly indicate scheduling of the third information, and all or a part of the first information and all or a part of the second information jointly indicate scheduling of the fourth information; and
all or a part of the third information indicates scheduling corresponding to the first data, and all or a part of the fourth information indicates scheduling corresponding to the second data; or
all or a part of the third information and all or a part of the fourth information jointly indicate scheduling corresponding to the first data, and all or a part of the third information and all or a part of the fourth information jointly indicate scheduling corresponding to the second data.

4. The method according to claim 3, wherein coding reliability corresponding to a bit that carries the first information is higher than coding reliability corresponding to a bit that carries the second information, and a reliability requirement corresponding to the first data is higher than a reliability requirement corresponding to the second data.

5. The method according to claim 2 or 3, wherein coding reliability corresponding to a bit that carries the third information is higher than coding reliability corresponding to a bit that carries the fourth information, and a reliability requirement corresponding to the first data is higher than a reliability requirement corresponding to the second data.

6. The method according to claim 3 or 4, wherein if a first multi-data joint coding scheme is used for the first information and the second information, the method further comprises:
performing joint decoding based on the first information and the second information; or
if the first multi-data joint coding scheme is used for the third information and the fourth information, the method further comprises:
performing joint decoding based on the third information and the fourth information.

7. The method according to claim 2 or 3, wherein if a second multi-data joint coding scheme is used for the third information and the fourth information, the method further comprises:
performing separate decoding based on the third information, and performing joint decoding based on the third information and the fourth information; or
if the second multi-data joint coding scheme is used for the first information and the second information, the method further comprises:
performing separate decoding based on the first information, and performing joint decoding based on the first information and the second information.

8. The method according to any one of claims 1 to 7, wherein the method further comprises:
obtaining first indication information, wherein the first indication information indicates whether the first control information and the second control information are used to jointly indicate scheduling of the plurality of pieces of data.

9. The method according to claim 8, wherein if the first indication information indicates that the first control information and the second control information are used to jointly indicate scheduling of the plurality of pieces of data, the method further comprises:
obtaining second indication information, wherein the second indication information indicates that a coding scheme of the second control information is the first multi-data joint coding scheme, the second multi-data joint coding scheme, or a multi-data separate coding scheme.

10. The method according to claim 9, wherein if the multi-data separate coding scheme is used for the third information and the fourth information, the method further comprises:
performing separate decoding based on the third information, and performing separate decoding based on the fourth information.

11. The method according to any one of claims 3 to 5, wherein the first information and the second information jointly indicate information about a first resource jointly occupied by the third information and the fourth information and a ratio between a code length corresponding to the third information and a code length corresponding to the fourth information.

12. The method according to any one of claims 3 to 5, wherein the first information and the second information jointly indicate at least one of the following:
information about a first resource jointly occupied by the third information and the fourth information; and
a first index value, wherein the first index value indicates an MCS index value corresponding to the third information and/or an MCS index value corresponding to the fourth information.

13. The method according to claim 12, wherein the first information and the second information further jointly indicate at least one of the following:
a relationship between a second resource occupied by the third information and the first resource;
a relationship between the MCS index value corresponding to the third information and the MCS index value corresponding to the fourth information; and
a first index table, wherein the first index table comprises correspondences between a plurality of index values, and an MCS index value corresponding to third information and an MCS index value corresponding to fourth information.

14. The method according to any one of claims 1 to 13, wherein the first control information is carried in 1st-stage downlink control information DCI, and the second control information is carried in 2^{nd}-stage DCI.

15. A communication method, wherein the method comprises:
sending first control information, wherein the first control information indicates scheduling of second control information corresponding to a plurality of pieces of data, and the plurality of pieces of data comprise at least first data and second data; and
sending the second control information, wherein the second control information indicates scheduling of the plurality of pieces of data.

16. The method according to claim 15, wherein the second control information comprises third information and fourth information, wherein
all or a part of the third information indicates scheduling corresponding to the first data, and all or a part of the fourth information indicates scheduling corresponding to the second data; or
all or a part of the third information and all or a part of the fourth information jointly indicate scheduling corresponding to the first data, and all or a part of the third information and all or a part of the fourth information jointly indicate scheduling corresponding to the second data.

17. The method according to claim 15 or 16, wherein the first control information comprises first information and second information, and the second control information comprises the third information and the fourth information, wherein
all or a part of the first information indicates scheduling of the third information, and all or a part of the second information indicates scheduling of the fourth information;
all or a part of the first information and all or a part of the second information jointly indicate scheduling of the third information, and all or a part of the first information and all or a part of the second information jointly indicate scheduling of the fourth information; and
all or a part of the third information indicates scheduling corresponding to the first data, and all or a part of the fourth information indicates scheduling corresponding to the second data; or
all or a part of the third information and all or a part of the fourth information jointly indicate scheduling corresponding to the first data, and all or a part of the third information and all or a part of the fourth information jointly indicate scheduling corresponding to the second data.

18. The method according to claim 17, wherein coding reliability corresponding to a bit that carries the first information is higher than coding reliability corresponding to a bit that carries the second information, and a reliability requirement corresponding to the first data is higher than a reliability requirement corresponding to the second data.

19. The method according to claim 16 or 17, wherein coding reliability corresponding to a bit that carries the third information is higher than coding reliability corresponding to a bit that carries the fourth information, and a reliability requirement corresponding to the first data is higher than a reliability requirement corresponding to the second data.

20. The method according to claim 17 or 18, wherein if a first multi-data joint coding scheme is used for the first information and the second information, the method further comprises:
performing joint encoding based on the first information and the second information; or
if the first multi-data joint coding scheme is used for the third information and the fourth information, the method further comprises:
performing joint encoding based on the third information and the fourth information.

21. The method according to claim 16 or 17, wherein if a second multi-data joint coding scheme is used for the third information and the fourth information, the method further comprises:
performing separate encoding based on the third information, and performing joint encoding based on the third information and the fourth information; or
if the second multi-data joint coding scheme is used for the first information and the second information, the method further comprises:
performing separate encoding based on the first information, and performing joint encoding based on the first information and the second information.

22. The method according to any one of claims 15 to 21, wherein the method further comprises:
obtaining first indication information, wherein the first indication information indicates whether the first control information and the second control information are used to jointly indicate scheduling of the plurality of pieces of data.

23. The method according to claim 22, wherein if the first indication information indicates that the first control information and the second control information are used to jointly indicate scheduling of the plurality of pieces of data, the method further comprises:
obtaining second indication information, wherein the second indication information indicates that a coding scheme of the second control information is the first multi-data joint coding scheme, the second multi-data joint coding scheme, or a multi-data separate coding scheme.

24. The method according to claim 23, wherein if the multi-data separate coding scheme is used for the third information and the fourth information, the method further comprises:
performing separate encoding based on the third information, and performing separate encoding based on the fourth information.

25. The method according to any one of claims 17 to 19, wherein the first information and the second information jointly indicate information about a first resource jointly occupied by the third information and the fourth information and a ratio between a code length corresponding to the third information and a code length corresponding to the fourth information.

26. The method according to any one of claims 17 to 19, wherein the first information and the second information jointly indicate at least one of the following:
information about a first resource jointly occupied by the third information and the fourth information; and
a first index value, wherein the first index value indicates an MCS index value corresponding to the third information and/or an MCS index value corresponding to the fourth information.

27. The method according to claim 26, wherein the first information and the second information further jointly indicate at least one of the following:
a relationship between a second resource occupied by the third information and the first resource;
a relationship between the MCS index value corresponding to the third information and the MCS index value corresponding to the fourth information; and
a first index table, wherein the first index table comprises correspondences between a plurality of index values, and an MCS index value corresponding to third information and an MCS index value corresponding to fourth information.

28. The method according to any one of claims 15 to 27, wherein the first control information is carried in 1st-stage downlink control information DCI, and the second control information is carried in 2^{nd}-stage DCI.

29. A communication apparatus, wherein the communication apparatus comprises an interface module, configured to receive first control information, wherein the first control information indicates scheduling of second control information corresponding to a plurality of pieces of data, and the plurality of pieces of data comprise at least first data and second data; and
the interface module is further configured to receive the second control information, wherein the second control information indicates scheduling of the plurality of pieces of data.

30. The apparatus according to claim 29, wherein the second control information comprises third information and fourth information, wherein
all or a part of the third information indicates scheduling corresponding to the first data, and all or a part of the fourth information indicates scheduling corresponding to the second data; or
all or a part of the third information and all or a part of the fourth information jointly indicate scheduling corresponding to the first data, and all or a part of the third information and all or a part of the fourth information jointly indicate scheduling corresponding to the second data.

31. The apparatus according to claim 29 or 30, wherein the first control information comprises first information and second information, and the second control information comprises the third information and the fourth information, wherein
all or a part of the first information indicates scheduling of the third information, and all or a part of the second information indicates scheduling of the fourth information; or
all or a part of the first information and all or a part of the second information jointly indicate scheduling of the third information, and all or a part of the first information and all or a part of the second information jointly indicate scheduling of the fourth information; and
all or a part of the third information indicates scheduling corresponding to the first data, and all or a part of the fourth information indicates scheduling corresponding to the second data; or
all or a part of the third information and all or a part of the fourth information jointly indicate scheduling corresponding to the first data, and all or a part of the third information and all or a part of the fourth information jointly indicate scheduling corresponding to the second data.

32. The apparatus according to claim 31, wherein coding reliability corresponding to a bit that carries the first information is higher than coding reliability corresponding to a bit that carries the second information, and a reliability requirement corresponding to the first data is higher than a reliability requirement corresponding to the second data.

33. The apparatus according to claim 30 or 31, wherein coding reliability corresponding to a bit that carries the third information is higher than coding reliability corresponding to a bit that carries the fourth information, and a reliability requirement corresponding to the first data is higher than a reliability requirement corresponding to the second data.

34. The apparatus according to claim 31 or 32, wherein if a first multi-data joint coding scheme is used for the first information and the second information, the apparatus further comprises a processing module, configured to perform joint decoding based on the first information and the second information; or
if the first multi-data joint coding scheme is used for the third information and the fourth information, the processing module is configured to perform joint decoding based on the third information and the fourth information.

35. The apparatus according to claim 30 or 31, wherein if a second multi-data joint coding scheme is used for the third information and the fourth information, the apparatus further comprises a processing module, configured to: perform separate decoding based on the third information, and perform joint decoding based on the third information and the fourth information; or
if the second multi-data joint coding scheme is used for the first information and the second information, the processing module is configured to: perform separate decoding based on the first information, and perform joint decoding based on the first information and the second information.

36. The apparatus according to any one of claims 29 to 35, wherein the interface module is further configured to obtain first indication information, wherein the first indication information indicates whether the first control information and the second control information are used to jointly indicate scheduling of the plurality of pieces of data.

37. The apparatus according to claim 36, wherein if the first indication information indicates that the first control information and the second control information are used to jointly indicate scheduling of the plurality of pieces of data, the apparatus further comprises the processing module, configured to obtain second indication information, wherein the second indication information indicates that a coding scheme of the second control information is the first multi-data joint coding scheme, the second multi-data joint coding scheme, or a multi-data separate coding scheme.

38. The apparatus according to claim 37, wherein if the multi-data separate coding scheme is used for the third information and the fourth information, the apparatus further comprises the processing module, configured to: perform separate decoding based on the third information, and perform separate decoding based on the fourth information.

39. The apparatus according to any one of claims 31 to 33, wherein the first information and the second information jointly indicate information about a first resource jointly occupied by the third information and the fourth information and a ratio between a code length corresponding to the third information and a code length corresponding to the fourth information.

40. The apparatus according to any one of claims 31 to 33, wherein the first information and the second information jointly indicate at least one of the following:
information about a first resource jointly occupied by the third information and the fourth information; and
a first index value, wherein the first index value indicates an MCS index value corresponding to the third information and/or an MCS index value corresponding to the fourth information.

41. The apparatus according to claim 40, wherein the first information and the second information further jointly indicate at least one of the following:
a relationship between a second resource occupied by the third information and the first resource;
a relationship between the MCS index value corresponding to the third information and the MCS index value corresponding to the fourth information; and
a first index table, wherein the first index table comprises correspondences between a plurality of index values, and an MCS index value corresponding to third information and an MCS index value corresponding to fourth information.

42. The apparatus according to any one of claims 29 to 41, wherein the first control information is carried in 1st-stage downlink control information DCI, and the second control information is carried in 2^{nd}-stage DCI.

43. A communication apparatus, wherein the communication apparatus comprises an interface module, configured to send first control information, wherein the first control information indicates scheduling of second control information corresponding to a plurality of pieces of data, and the plurality of pieces of data comprise at least first data and second data; and
the interface module is further configured to send the second control information, wherein the second control information indicates scheduling of the plurality of pieces of data.

44. The apparatus according to claim 43, wherein the second control information comprises third information and fourth information, wherein
all or a part of the third information indicates scheduling corresponding to the first data, and all or a part of the fourth information indicates scheduling corresponding to the second data; or
all or a part of the third information and all or a part of the fourth information jointly indicate scheduling corresponding to the first data, and all or a part of the third information and all or a part of the fourth information jointly indicate scheduling corresponding to the second data.

45. The apparatus according to claim 43 or 44, wherein the first control information comprises first information and second information, and the second control information comprises the third information and the fourth information, wherein
all or a part of the first information indicates scheduling of the third information, and all or a part of the second information indicates scheduling of the fourth information; or
all or a part of the first information and all or a part of the second information jointly indicate scheduling of the third information, and all or a part of the first information and all or a part of the second information jointly indicate scheduling of the fourth information; and
all or a part of the third information indicates scheduling corresponding to the first data, and all or a part of the fourth information indicates scheduling corresponding to the second data; or
all or a part of the third information and all or a part of the fourth information jointly indicate scheduling corresponding to the first data, and all or a part of the third information and all or a part of the fourth information jointly indicate scheduling corresponding to the second data.

46. The apparatus according to claim 45, wherein coding reliability corresponding to a bit that carries the first information is higher than coding reliability corresponding to a bit that carries the second information, and a reliability requirement corresponding to the first data is higher than a reliability requirement corresponding to the second data.

47. The apparatus according to claim 43 or 44, wherein coding reliability corresponding to a bit that carries the third information is higher than coding reliability corresponding to a bit that carries the fourth information, and a reliability requirement corresponding to the first data is higher than a reliability requirement corresponding to the second data.

48. The apparatus according to claim 45 or 46, wherein if a first multi-data joint coding scheme is used for the first information and the second information, the apparatus further comprises a processing module, configured to perform joint encoding based on the first information and the second information; or
if the first multi-data joint coding scheme is used for the third information and the fourth information, the processing module is configured to perform joint encoding based on the third information and the fourth information.

49. The apparatus according to claim 43 or 44, wherein if a second multi-data joint coding scheme is used for the third information and the fourth information, the apparatus further comprises a processing module, configured to: perform separate encoding based on the third information, and perform joint encoding based on the third information and the fourth information; or
if the second multi-data joint coding scheme is used for the first information and the second information, the processing module is configured to: perform separate encoding based on the first information, and perform joint encoding based on the first information and the second information.

50. The apparatus according to any one of claims 43 to 49, wherein the interface module is further configured to obtain first indication information, wherein the first indication information indicates whether the first control information and the second control information are used to jointly indicate scheduling of the plurality of pieces of data.

51. The apparatus according to claim 50, wherein if the first indication information indicates that the first control information and the second control information are used to jointly indicate scheduling of the plurality of pieces of data, the interface module is further configured to obtain second indication information, wherein the second indication information indicates that a coding scheme of the second control information is the first multi-data joint coding scheme, the second multi-data joint coding scheme, or a multi-data separate coding scheme.

52. The apparatus according to claim 51, wherein if the multi-data separate coding scheme is used for the third information and the fourth information, the apparatus further comprises the processing module, configured to: perform separate encoding based on the third information, and perform separate encoding based on the fourth information.

53. The apparatus according to any one of claims 45 to 47, wherein the first information and the second information jointly indicate information about a first resource jointly occupied by the third information and the fourth information and a ratio between a code length corresponding to the third information and a code length corresponding to the fourth information.

54. The apparatus according to any one of claims 45 to 47, wherein the first information and the second information jointly indicate at least one of the following:
information about a first resource jointly occupied by the third information and the fourth information; and
a first index value, wherein the first index value indicates an MCS index value corresponding to the third information and/or an MCS index value corresponding to the fourth information.

55. The apparatus according to claim 54, wherein the first information and the second information further jointly indicate at least one of the following:
a relationship between a second resource occupied by the third information and the first resource;
a relationship between the MCS index value corresponding to the third information and the MCS index value corresponding to the fourth information; and
a first index table, wherein the first index table comprises correspondences between a plurality of index values, and an MCS index value corresponding to third information and an MCS index value corresponding to fourth information.

56. The apparatus according to any one of claims 43 to 55, wherein the first control information is carried in 1st-stage downlink control information DCI, and the second control information is carried in 2^{nd}-stage DCI.

57. A communication apparatus, comprising a processor, wherein the processor is coupled to a memory, the memory is configured to store a program or instructions, and when the program or the instructions are executed by the processor, the apparatus is caused to perform the method according to any one of claims 1 to 14.

58. A communication apparatus, comprising a processor, wherein the processor is coupled to a memory, the memory is configured to store a program or instructions, and when the program or the instructions are executed by the processor, the apparatus is caused to perform the method according to any one of claims 15 to 28.

59. A computer-readable storage medium, wherein the computer-readable storage medium stores a computer program or instructions, and when the computer program or the instructions are executed, a computer is caused to perform the method according to any one of claims 1 to 14 or the method according to any one of claims 15 to 28.

60. A computer program product, wherein the computer program product comprises computer program code, and when the computer program code is run on a computer, the computer is caused to implement the method according to any one of claims 1 to 14 or implement the method according to any one of claims 15 to 28.

61. A communication system, wherein the communication system comprises the communication apparatus according to any one of claims 29 to 42 and the communication apparatus according to any one of claims 43 to 56.
